# EUROPÄISCHE PATENTSCHRIFT

(11) **EP 4 286 798 B1**
(45) Veröffentlichungstag und Bekanntmachung des Hinweises auf die Patenterteilung: **09.04.2025**
(21) Anmeldenummer: 22176780.9
(22) Anmeldetag: 01.06.2022
(51) Int. Cl.: G01D 5/244, G01D 5/347

(54) **ANORDNUNG FÜR EINE POSITIONSMESSUNG**
ASSEMBLY FOR POSITION MEASUREMENT
AGENCEMENT POUR UNE MESURE DE POSITION

(43) Veröffentlichungstag der Anmeldung: 06.12.2023
(73) Patentinhaber: Dr. Johannes Heidenhain GmbH, 83301 Traunreut (DE)
(72) Erfinder: GEYERMANN, Dirk, 83313 Siegsdorf (DE)

(56) Entgegenhaltungen:
- EP-A1- 3 026 389
- EP-A1- 3 705 850
- EP-A1- 3 892 962
- DE-A1- 102005 027 025

## Beschreibung

### GEBIET DER TECHNIK

Die vorliegende Erfindung betrifft eine Anordnung nach dem Oberbegriff des Anspruchs 1.

### STAND DER TECHNIK

EP 3 892 962 A1 offenbart eine Anordnung mit einem Träger und einem auf dem Träger angeordneten Maßstab. Der Maßstab erstreckt sich in einer Längsrichtung. Der Maßstab weist eine in einer Messteilungsebene angeordnete Messteilung zur Positionsmessung zumindest in Längsrichtung auf. Der Träger weist eine Mehrzahl von einzelnen Abschnitten auf. Die einzelnen Abschnitte des Trägers sind jeweils als ein Befestigungselement zum Befestigen des Maßstabs an dem Träger ausgebildet. Die Befestigungselemente umfassen jeweils mehrteilig ausgebildete Befestigungselemente.

Weitere Anordnungen mit einer Mehrzahl von Befestigungselementen sind aus DE 10 2005 027 025 A1, EP 3 026 389 A1 und EP 3 705 850 A1 bekannt.

### ZUSAMMENFASSUNG DER ERFINDUNG

Der vorliegenden Erfindung liegt die Aufgabe zugrunde, eine Anordnung für eine Positionsmessung anzugeben, die einen einfachen und kostengünstigen Aufbau hat und mit der eine präzise Positionsmessung ermöglicht wird.

Diese Aufgabe wird erfindungsgemäß durch eine Anordnung mit den Merkmalen des Anspruchs 1 gelöst.

Die erfindungsgemäß ausgebildete Anordnung umfasst einen Träger und einen auf dem Träger angeordneten Maßstab. Der Maßstab erstreckt sich in einer Längsrichtung. Der Maßstab weist eine in einer Messteilungsebene angeordnete Messteilung zur Positionsmessung zumindest in Längsrichtung auf. Der Träger weist eine Mehrzahl von einzelnen Abschnitten auf. Die einzelnen Abschnitte des Trägers sind jeweils als ein Befestigungselement zum Befestigen des Maßstabs an dem Träger ausgebildet. Der Träger weist ein erstes Befestigungselement und ein zweites Befestigungselement auf. Das erste Befestigungselement ist dazu ausgebildet, einen ersten Querschnitt des Maßstabs an einer ersten Position in Längsrichtung frei beweglich gegenüber dem Träger zu tragen. Das zweite Befestigungselement ist dazu ausgebildet, einen zweiten Querschnitt des Maßstabs an einer von der ersten Position verschiedenen zweiten Position in Längsrichtung starr an dem Träger zu tragen. Das zweite Befestigungselement ist derart ausgebildet, dass esan der zweiten Position eine Bewegung von zwei in Querrichtung einander gegenüberliegend angeordneten zweiten Randabschnitten des Maßstabs gegenüber dem Träger senkrecht zu einer Referenzachse zulässt. Die Referenzachse verläuft parallel zur Längsrichtung.

Das erste Befestigungselement ist derart ausgebildet, dass es an der ersten Position eine Bewegung von zwei in Querrichtung einander gegenüberliegend angeordneten ersten Randabschnitten des Maßstabs gegenüber dem Träger senkrecht zur Referenzachse zulässt. Das erste Befestigungselement hat einen ersten Abschnitt zum Befestigen des ersten Befestigungselements an einem Grundkörper, einen mit dem ersten Abschnitt verbundenen zweiten Abschnitt zum Tragen des Maßstabs und einen mit dem zweiten Abschnitt verbundenen dritten und vierten Abschnitt zum Befestigen der ersten Randabschnitte des Maßstabs an dem ersten Befestigungselement. Das erste Befestigungselement weist ein erstes Paar von Festkörpergelenken auf. Die Festkörpergelenke des ersten Paares sind derart ausgebildet, dass sie eine Bewegung des zweiten Abschnitts gegenüber dem ersten Abschnitt in Längsrichtung zulassen. Das erste Befestigungselement weist ein zweites Paar von Festkörpergelenken auf. Die Festkörpergelenke des zweiten Paares sind derart ausgebildet, dass sie eine Bewegung des dritten und vierten Abschnitts gegenüber dem zweiten Abschnitt in Querrichtung zulassen. Der dritte und vierte Abschnitt sind durch eine erste stoffschlüssige Verbindung zumindest an einer Unterseite des Maßstabs an der ersten Position befestigt. Das zweite Befestigungselement hat einen fünften Abschnitt zum Befestigen des zweiten Befestigungselements an dem Grundkörper und einen mit dem fünften Abschnitt verbundenen sechsten und siebten Abschnitt zum Befestigen der zweiten Randabschnitte des Maßstabs an dem zweiten Befestigungselement. Das zweite Befestigungselement weist ein drittes Paar von Festkörpergelenken auf. Die Festkörpergelenke des dritten Paares sind derart ausgebildet, dass sie eine Bewegung des sechsten und siebten Abschnitts gegenüber dem fünften Abschnitt in Querrichtung zulassen. Der sechste und siebte Abschnitt sind durch eine zweite stoffschlüssige Verbindung zumindest an der Unterseite des Maßstabs an der zweiten Position befestigt.

Unter einem Tragen eines Querschnitts des Maßstabs gegenüber bzw. an dem Träger und einem Zulassen einer Bewegung eines Randabschnitts des Maßstabs gegenüber dem Träger werden dabei verstanden, dass das Tragen bzw. Zulassen in Bezug auf einen mit einem Grundkörper fest verbundenen Teil des Trägers in einem verbundenen Zustand des Trägers erfolgen kann. Im verbundenen Zustand des Trägers erfolgt das Tragen bzw. Zulassen nicht nur in Bezug auf den fest verbundenen Teil des Trägers, sondern auch in Bezug auf den Grundkörper (Bezugskörper).

Vorzugsweise ist die Referenzachse eine Symmetrieachse des Maßstabs.

Es ist vorteilhaft, wenn das erste und zweite Befestigungselement derart ausgebildet sind, dass sie jeweils an der ersten und zweiten Position eine Bewegung der ersten und zweiten Randabschnitte des Maßstabs gegenüber dem Träger in Richtung hin zu oder weg von der Referenzachse zulassen.

Ferner ist es vorteilhaft, wenn das erste und zweite Befestigungselement derart ausgebildet sind, dass sie jeweils an der ersten und zweiten Position eine in Bezug auf die Referenzachse symmetrische Bewegung der ersten und zweiten Randabschnitte des Maßstabs gegenüber dem Träger zulassen.

Beispielsweise wird die vorzugsweise symmetrische Bewegung der ersten bzw. zweiten Randabschnitte durch eine thermische Ausdehnung oder thermische Kontraktion des Maßstabs relativ zum Träger bewirkt. Die thermische Ausdehnung bzw. thermische Kontraktion ergibt sich wiederum aus unterschiedlichen thermischen Ausdehnungskoeffizienten eines Materials des Maßstabs und eines Materials des Trägers.

Vorzugsweise sind das erste und zweite Befestigungselement jeweils einstückig (d. h. nicht mehrteilig) ausgebildet (sog. monolithische Bauweise).

Vorzugsweise sind das erste Befestigungselement und der erste Querschnitt des Maßstabs und das zweite Befestigungselement und der zweite Querschnitt des Maßstabs jeweils unmittelbar miteinander verbunden. Hierzu dienen beispielsweise eine erste bzw. zweite stoffschlüssige, vorzugsweise steife Verbindung. Unmittelbar miteinander verbunden bedeutet, dass die jeweiligen Elemente direkt, d. h. nicht über ein oder mehrere Zwischenelemente (z. B. Zwischenträger), miteinander verbunden sind.

Es ist vorteilhaft, wenn die einzelnen Abschnitte des Trägers in Längsrichtung getrennt voneinander angeordnet sind.

Ferner ist es vorteilhaft, wenn die einzelnen Abschnitte des Trägers in Längsrichtung verteilt, beispielsweise äquidistant, angeordnet sind.

Vorzugsweise ist das erste Befestigungselement dazu ausgebildet, den ersten Querschnitt des Maßstabs an der ersten Position in Höhenrichtung (Freiheitsgrad Z) starr an dem Träger zu tragen. Das zweite Befestigungselement ist vorzugsweise dazu ausgebildet, den zweiten Querschnitt des Maßstabs an der zweiten Position in Höhenrichtung (Freiheitsgrad Z) starr an dem Träger zu tragen.

Die Messteilung dient bevorzugt zur Positionsmessung in in-plane-Freiheitsgraden (d. h. Freiheitsgrade X, Y, RZ). Darüber hinaus kann die Messteilung auch zur Positionsmessung in weiteren Freiheitsgraden (z. B. Freiheitsgrade Z, RX, RY) dienen.

Beispielsweise ist die Messteilung eine Inkrementalteilung. Alternativ dazu kann die Messteilung eine absolute Teilung sein, beispielsweise ausgebildet als Pseudo-Random-Code.

Durch die Erfindung werden zum einen ein einfacher und kostengünstiger Aufbau und zum anderen eine hohe Genauigkeit der Positionsmessung erreicht. Hierzu ist insbesondere ein mehrteilig aufgebauter Träger (d. h. die einzelnen Abschnitte des Trägers) zur Verbindung zwischen dem Träger und einem Grundkörper (z. B. Maschinenbett) vorgesehen. Ferner wird durch die einzelnen Abschnitte des Trägers eine Mehrzahl von Befestigungselementen gebildet. Die Befestigungselemente dienen einerseits zur (lokalen) ortsfesten Fixierung eines Querschnitts des Maßstabs gegenüber dem Träger (im Folgenden äußere lokale ortsfeste Fixierung) und andererseits zur (jeweils lokalen) Entkopplung des Querschnitts des Maßstabs gegenüber dem Träger (im Folgenden äußere lokale Entkopplung). Dabei erfolgt die äußere lokale ortsfeste Fixierung zumindest in Bezug auf die Freiheitsgrade X, Y. Ferner erfolgt die äußere lokale Entkopplung in dem Freiheitsgrad X. Zur Realisierung der äußeren lokalen Entkopplung ist insbesondere ein erstes Befestigungselement (im Folgenden Flexelement) vorgesehen. Ferner ist zur Realisierung der äußeren lokalen ortsfesten Fixierung ein zweites Befestigungselement (im Folgenden Fixpunktelement) vorgesehen. Durch das Flexelement und das Fixpunktelement wird zusätzlich eine (jeweils lokale) Entkopplung von Randabschnitten des Maßstabs gegenüber dem Träger erreicht (im Folgenden innere lokale Entkopplung). Dabei erfolgt die innere lokale Entkopplung in dem Freiheitsgrad Y. Durch die äußere lokale Entkopplung sowie die innere lokale Entkopplung werden durch eine Temperaturänderung bedingte Einflüsse (z. B. Zwangskräfte zwischen dem Träger und dem Maßstab) vermieden oder zumindest reduziert. Dadurch wird im Wesentlichen eine präzise Positionsmessung ermöglicht.

Vorteilhafte Ausbildungen der Erfindung entnimmt man den abhängigen Ansprüchen.

Weitere Einzelheiten und Vorteile der vorliegenden Erfindung werden anhand der nachfolgenden Beschreibung von Ausführungsbeispielen der Erfindung in Verbindung mit den Figuren erläutert.

### KURZE BESCHREIBUNG DER ZEICHNUNGEN

Es zeigen
- Figur 1: eine perspektivische Ansicht einer beispielhaften Anordnung;
- Figur 2: eine Draufsicht auf die Anordnung nach Figur 1;
- Figur 3a: eine perspektivische Ansicht eines ersten Teils der Anordnung nach Figur 1;
- Figur 3b: eine Draufsicht auf den ersten Teil nach Figur 3a;
- Figur 4a: eine perspektivische Ansicht eines zweiten Teils der Anordnung nach Figur 1;
- Figur 4b: eine Draufsicht auf den zweiten Teil nach Figur 4a;
- Figur 5a: eine perspektivische Ansicht eines ersten Befestigungselements des ersten Teils nach Figur 3a;
- Figur 5b: eine Draufsicht auf das erste Befestigungselement nach Figur 5a;
- Figur 5c: eine Unteransicht des ersten Befestigungselements nach Figur 5a;
- Figur 5d: eine perspektivische Ansicht eines beispielhaften alternativen ersten Befestigungselements;
- Figur 6a: eine perspektivische Ansicht eines zweiten Befestigungselements des zweiten Teils nach Figur 4a;
- Figur 6b: eine Draufsicht auf das zweite Befestigungselement nach Figur 6a;
- Figur 6c: eine Unteransicht des zweiten Befestigungselements nach Figur 6a;
- Figur 6d: eine perspektivische Ansicht eines beispielhaften alternativen zweiten Befestigungselements;
- Figur 7a: eine perspektivische Ansicht des ersten Befestigungselements nach Figur 5a in einem ersten ausgelenkten Zustand;
- Figur 7b: eine perspektivische Ansicht des ersten Befestigungselements nach Figur 5a in einem zweiten ausgelenkten Zustand;
- Figur 8: eine perspektivische Ansicht des zweiten Befestigungselements nach Figur 6a in einem ausgelenkten Zustand;
- Figur 9a: eine Querschnittsansicht entlang einer Schnittlinie A-A in Figur 3b; und
- Figur 9b: eine Querschnittsansicht entlang einer Schnittlinie B-B in Figur 4b.

### BESCHREIBUNG DER AUSFÜHRUNGSFORMEN

Gleiche Elemente oder funktionell gleiche Elemente sind in den Figuren mit gleichen Bezugszeichen versehen.

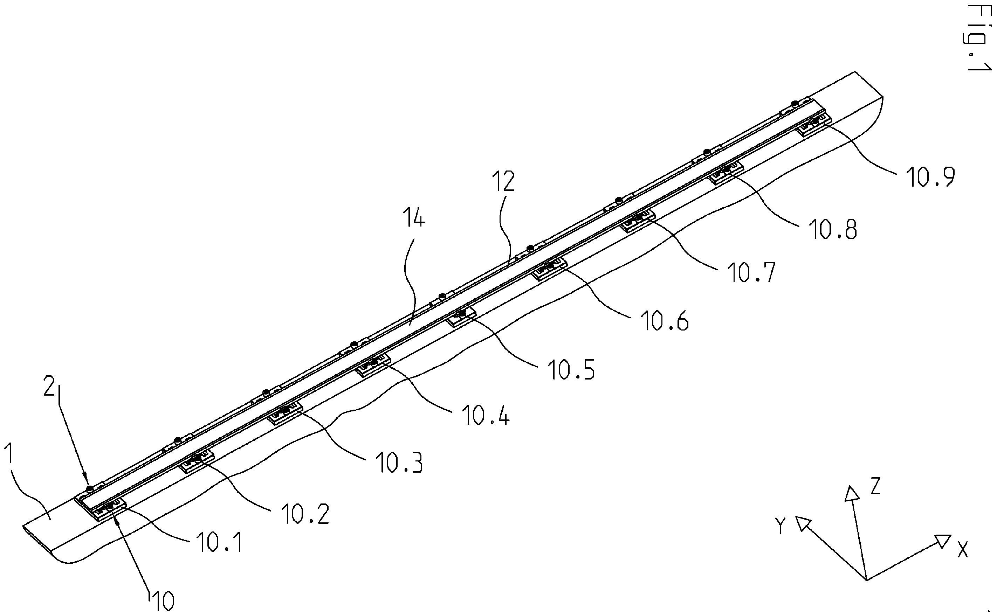

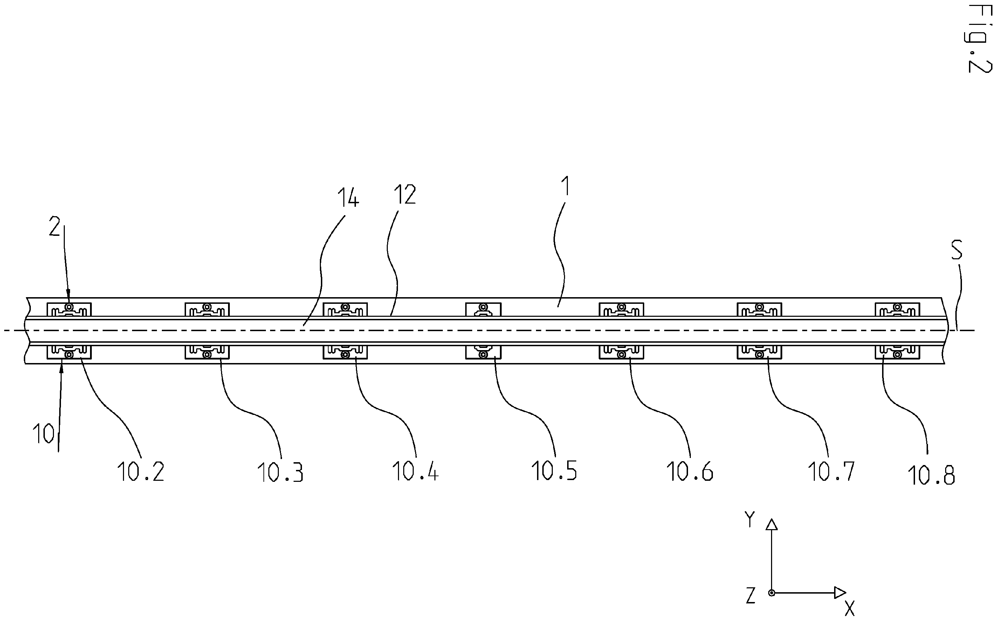

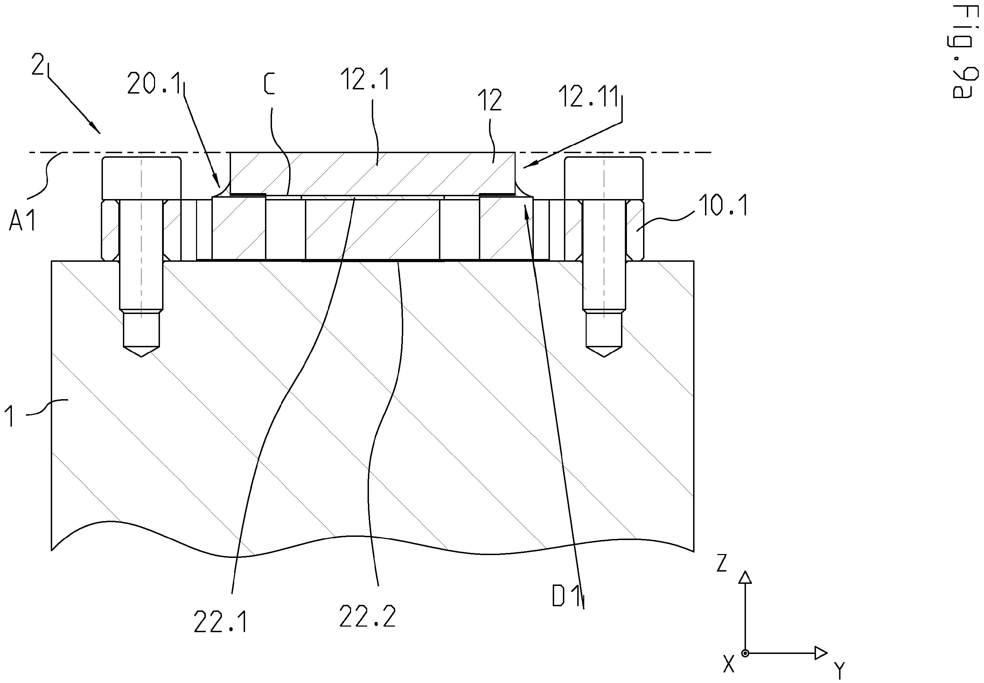

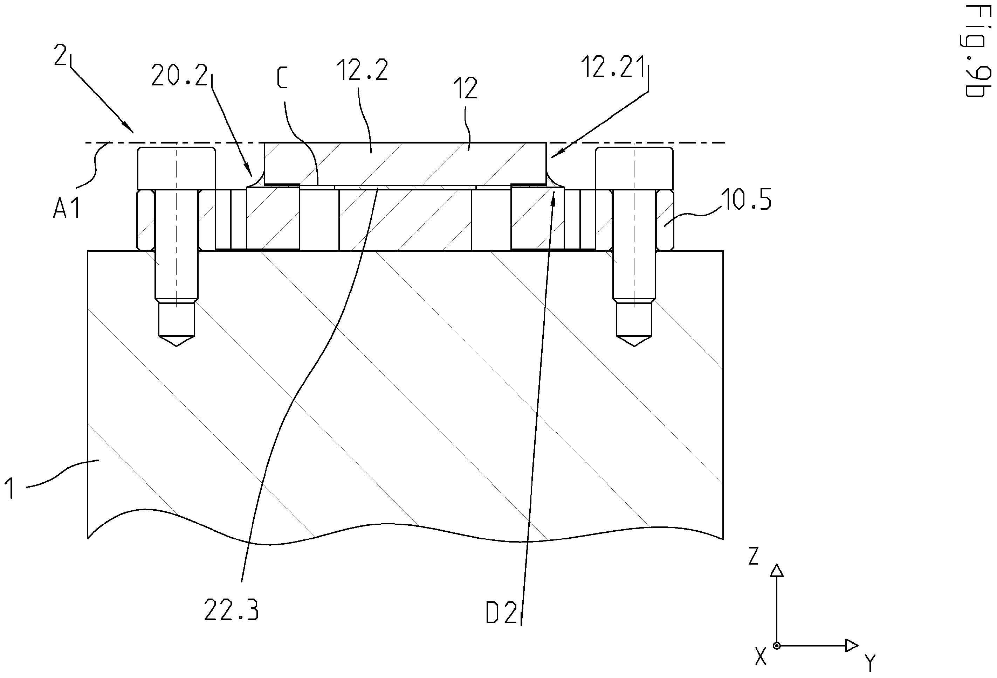

Eine Ausführungsform der Erfindung wird nachfolgend anhand der Figuren 1 und 2 erläutert. Die beispielhafte Anordnung umfasst einen Träger 10 und einen auf dem Träger 10 angeordneten Maßstab 12. Der Maßstab 12 erstreckt sich in einer Längsrichtung (Hauptmessrichtung) X und weist eine in einer Messteilungsebene A1 (d. h. X/Y-Ebene, vgl. Figur 9a bzw. 9b) angeordnete Messteilung 14 auf. Die Messteilung 14 ist als lichtelektrisch abtastbare Inkrementalteilung zur hochgenauen Positionsmessung in Längsrichtung X sowie zusätzlich in einer zweiten senkrecht dazu verlaufenden Querrichtung Y ausgebildet. Der Maßstab 12 besteht vorzugsweise aus einem Material mit einem vernachlässigbar kleinen thermischen Ausdehnungskoeffizienten, insbesondere mit einem thermischen Ausdehnungskoeffizienten α im Temperaturbereich von 0° bis 50°C kleiner als 1,5 x 10⁻⁶ K⁻¹, insbesondere aber kleiner als 0,1 x 10⁻⁶ K⁻¹. Derartige Materialien sind Glas bzw. Glaskeramik (z. B. Zerodur) oder Metalle wie z. B. Invar.

Der Träger 10 besteht vorzugsweise aus Stahl mit einem thermischen Ausdehnungskoeffizienten von etwa 10,5 × 10⁻⁶ K⁻¹.

Der Träger 10 weist eine Mehrzahl von einzelnen plattenförmigen Abschnitten 10.1 bis 10.9 auf. Die einzelnen Abschnitte 10.1 bis 10.9 des Trägers 10 sind jeweils als ein Befestigungselement zum Befestigen des Maßstabs 12 an dem Träger 10 ausgebildet. Der Maßstab 12 ist quaderförmig ausgebildet (vgl. Figur 1).

Der Träger 10 weist ein erstes Befestigungselement (Abschnitt 10.1) und ein zweites Befestigungselement (Abschnitt 10.5) auf. Das erste Befestigungselement 10.1 kann auch als Flexelement bezeichnet werden. Das zweite Befestigungselement 10.5 kann auch als Fixpunktelement bezeichnet werden.

Die in Figur 1 gezeigte Anordnung ist auf einem Grundkörper 1 (z. B. Maschinenbett oder weiterer Träger) angeordnet. Zur Befestigung der Anordnung an dem Grundkörper 1 sind Schrauben 2 vorgesehen. Die Schrauben 2 erstrecken sich durch die einzelnen Abschnitte 10.1 bis 10.9 hindurch bis in den Grundkörper 1 hinein. Der Grundkörper 1 besteht beispielsweise aus einem Material (z. B. Granit oder Aluminium) mit einem thermischen Ausdehnungskoeffizienten, der sich vom thermischen Ausdehnungskoeffizienten des Maßstabs 12 und/oder des Trägers 10 unterscheidet.

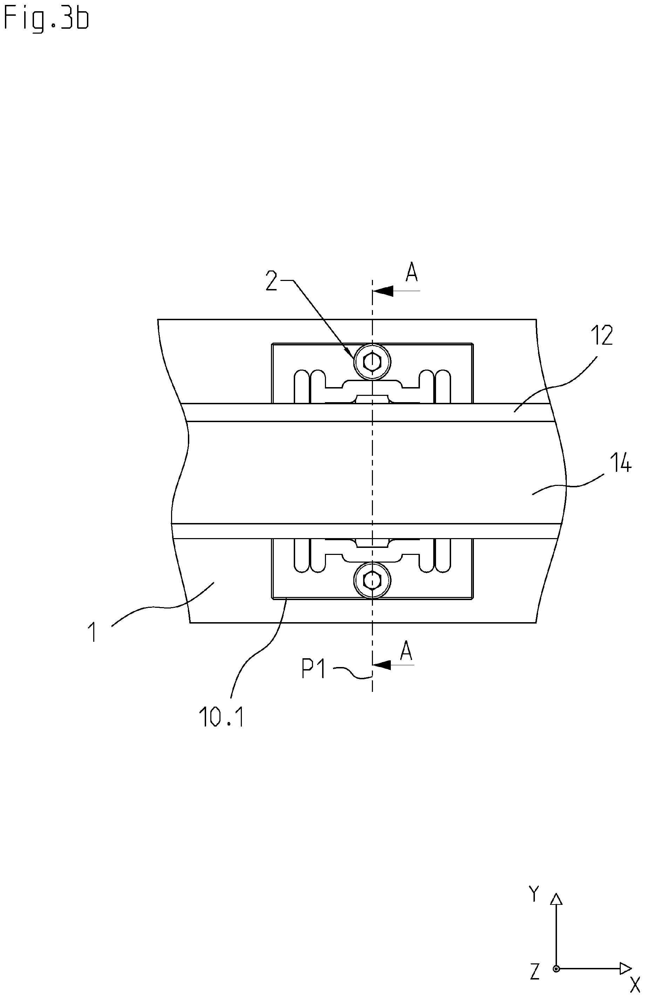

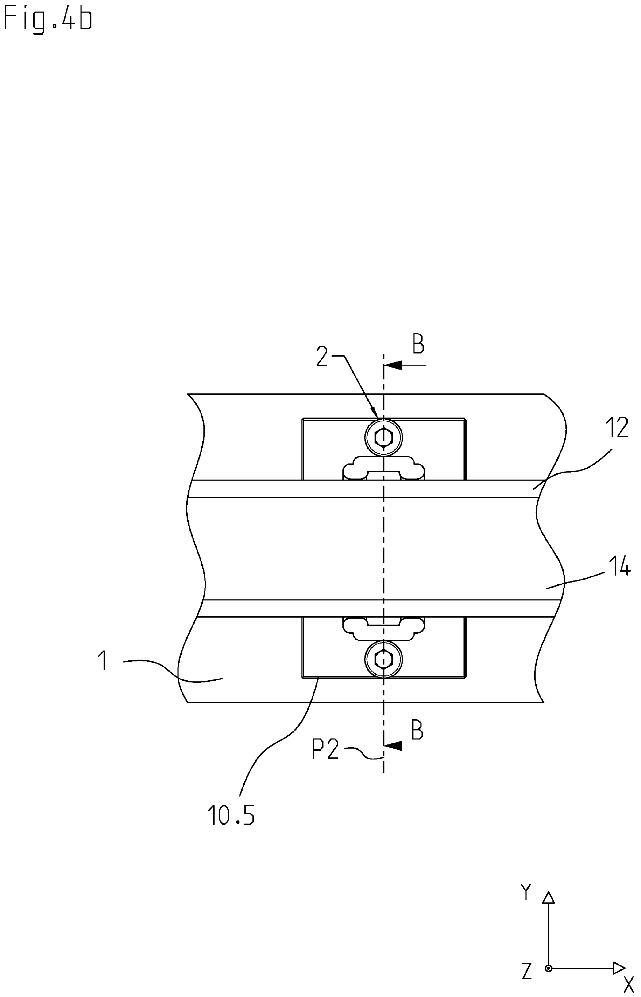

Das erste Befestigungselement 10.1 ist dazu ausgebildet, einen ersten Querschnitt 12.1 (vgl. Figur 9a) des Maßstabs 12 an einer ersten Position P1 (vgl. Figur 3b) in Längsrichtung X frei beweglich gegenüber dem Träger 10 zu tragen. Das zweite Befestigungselement 10.5 ist dazu ausgebildet, einen zweiten Querschnitt 12.2 (vgl. Figur 9b) des Maßstabs 12 an einer von der ersten Position P1 verschiedenen zweiten Position P2 (vgl. Figur 4b) in Längsrichtung X starr an dem Träger 10 zu tragen.

Das erste Befestigungselement 10.1 ermöglicht gleichsam eine Entkopplung/ortsfeste Fixierung in Bezug auf die folgenden Freiheitsgrade an der ersten Position P1: X_außen frei, Y_außen starr. Das zweite Befestigungselement 10.5 ermöglicht gleichsam eine ortsfeste Fixierung in Bezug auf die folgenden Freiheitsgrade an der zweiten Position P2: X_außen starr, Y_außen starr.

Das erste und zweite Befestigungselement 10.1, 10.5 sind derart ausgebildet, dass sie jeweils an der ersten und zweiten Position P1, P2 eine Bewegung von zwei in Querrichtung Y einander gegenüberliegend angeordneten ersten und zweiten Randabschnitten 12.11, 12.21 (vgl. Figur 9a, 9b) des Maßstabs 12 gegenüber dem Träger 10 senkrecht zu einer Referenzachse S (vgl. Figur 2) zulassen. Wie in Figur 2 gezeigt, verläuft die Referenzachse S parallel zur Längsrichtung X.

Das erste und zweite Befestigungselement 10.1, 10.5 ermöglichen somit gleichsam eine Entkopplung in Bezug auf den folgenden Freiheitsgrad an der ersten bzw. zweiten Position P1, P2: Y_innen frei.

In Bezug auf Figur 2 ist die Referenzachse S eine Symmetrieachse (d. h. Mittelachse) des Maßstabs 12.

Das erste und zweite Befestigungselement 10.1, 10.5 sind derart ausgebildet, dass sie jeweils an der ersten und zweiten Position P1, P2 eine Bewegung der ersten und zweiten Randabschnitte 12.11, 12.21 des Maßstabs 12 gegenüber dem Träger 10 in Richtung hin zu oder weg von der Referenzachse S zulassen. Dabei bedeutet eine Bewegung in Richtung hin zur Referenzachse S, dass sich die ersten bzw. zweiten Randabschnitte 12.11, 12.21 in entgegengesetzter Richtung nach innen, d. h. zur Mittelachse des Maßstabs 12 hin, bewegen. Ferner bedeutet eine Bewegung in Richtung weg von der Referenzachse S, dass sich die ersten bzw. zweiten Randabschnitte 12.11, 12.21 in entgegengesetzter Richtung nach außen, d. h. von der Mittelachse des Maßstabs 12 weg, bewegen.

Durch das erste und zweite Befestigungselement 10.1, 10.5 wird jeweils an der ersten und zweiten Position P1, P2 eine in Bezug auf die Referenzachse S symmetrische Bewegung der ersten und zweiten Randabschnitte 12.11, 12.21 des Maßstabs 12 gegenüber dem Träger 10 zugelassen. Unter einer symmetrischen Bewegung wird dabei verstanden, dass sich die ersten bzw. zweiten Randabschnitte 12.11, 12.21 in Bezug auf die Stärke und/oder Richtung der Bewegung gleichmäßig bewegen.

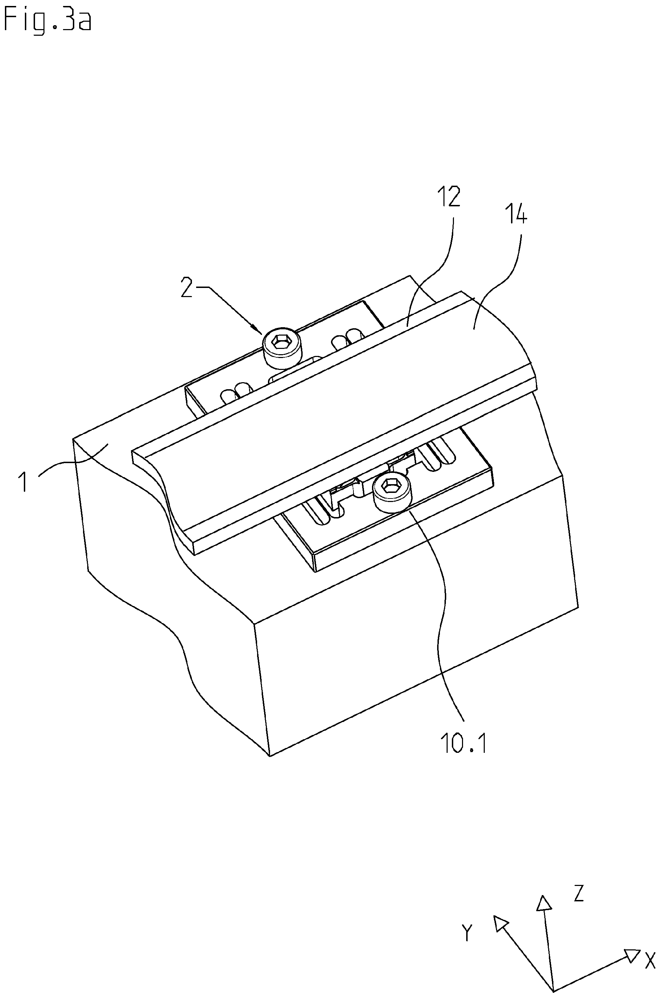

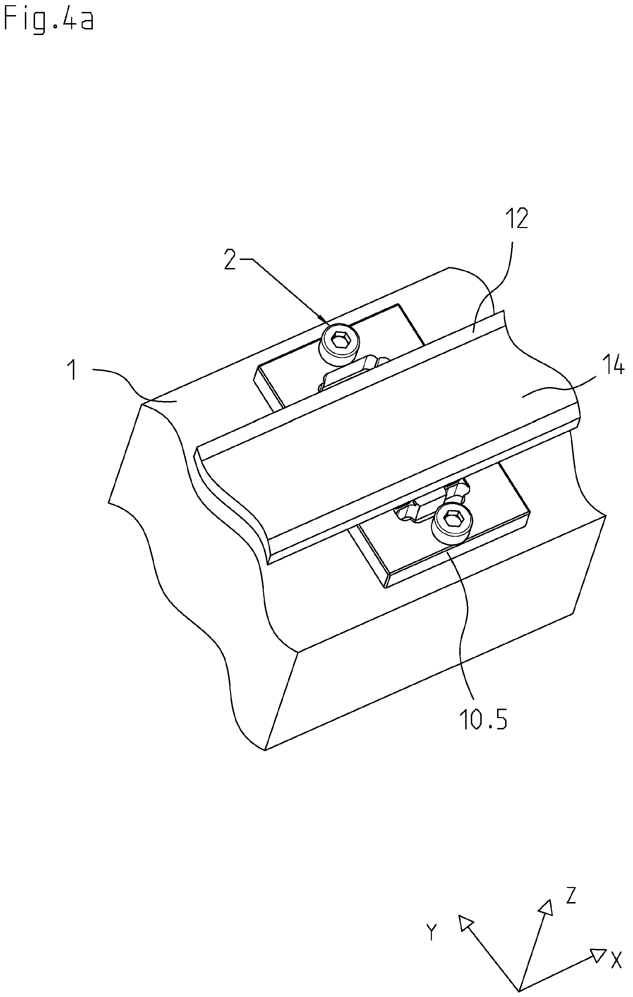

Figur 3a zeigt eine perspektivische Ansicht eines ersten Teils der Anordnung nach Figur 1. Der erste Teil nach Figur 3a umfasst das erste Befestigungselement 10.1 (Flexelement). Figur 4a zeigt eine perspektivische Ansicht eines zweiten Teils der Anordnung nach Figur 1. Der zweite Teil nach Figur 4a umfasst das zweite Befestigungselement 10.5 (Fixpunktelement). Im Folgenden werden nähere Einzelheiten des ersten und zweiten Befestigungselements 10.1, 10.5 erläutert.

Es ist anzumerken, dass die weiteren Befestigungselemente (d. h. die einzelnen Abschnitte 10.2 bis 10.4 und 10.6 bis 10.9 in Figur 1) jeweils analog zum ersten Befestigungselement 10.1 ausgebildet sind.

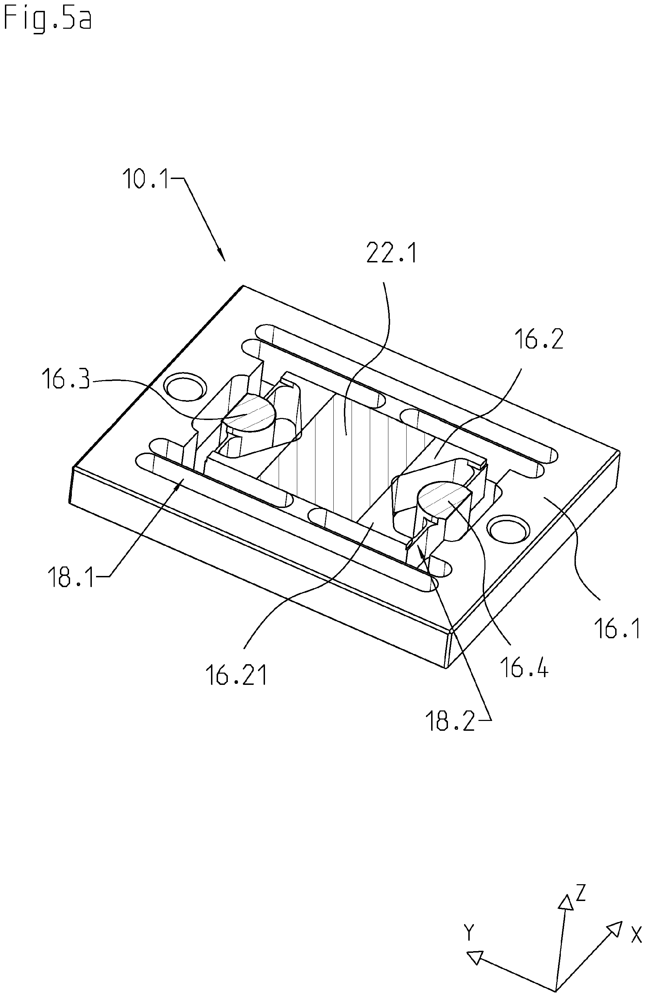

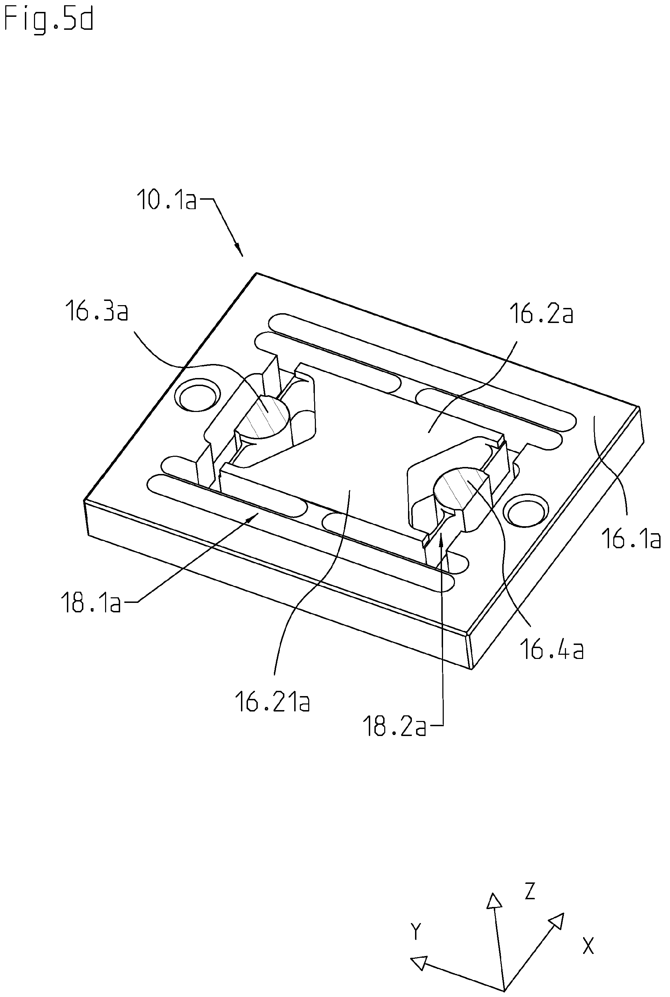

In den Figuren 5a bis 5c sind verschiedene Ansichten des ersten Befestigungselements 10.1 gezeigt. Figur 5d zeigt eine perspektivische Ansicht eines beispielhaften alternativen ersten Befestigungselements 10.1a. Das alternative erste Befestigungselement 10.1a kann anstelle des ersten Befestigungselements 10.1 Teil der Anordnung nach Figur 1 sein.

Wie in Figur 5a gezeigt, hat das erste Befestigungselement 10.1 einen ersten Abschnitt 16.1 zum Befestigen des ersten Befestigungselements 10.1 am Grundkörper 1, einen mit dem ersten Abschnitt 16.1 verbundenen zweiten Abschnitt 16.2 zum Tragen des Maßstabs 12 und einen mit dem zweiten Abschnitt 16.2 verbundenen dritten und vierten Abschnitt 16.3, 16.4 zum Befestigen der ersten Randabschnitte 12.11 des Maßstabs 12 an dem ersten Befestigungselement 10.1. Das erste Befestigungselement 10.1 weist ein erstes Paar von Festkörpergelenken 18.1 auf. Die Festkörpergelenke 18.1 des ersten Paares sind derart ausgebildet, dass sie eine Bewegung des zweiten Abschnitts 16.2 gegenüber dem ersten Abschnitt 16.1 in Längsrichtung X zulassen. Das erste Befestigungselement 10.1 weist ein zweites Paar von Festkörpergelenken 18.2 auf. Die Festkörpergelenke 18.2 des zweiten Paares sind derart ausgebildet, dass sie eine Bewegung des dritten und vierten Abschnitts 16.3, 16.4 gegenüber dem zweiten Abschnitt 16.2 in Querrichtung Y zulassen.

Gemäß Figur 5a sind der erste Abschnitt 16.1 und der zweite Abschnitt 16.2 über das erste Paar von Festkörpergelenken 18.1 miteinander verbunden. Ferner sind gemäß Figur 5a der dritte und vierte Abschnitt 16.3, 16.4 und der zweite Abschnitt 16.2 über das zweite Paar von Festkörpergelenken 18.2 miteinander verbunden.

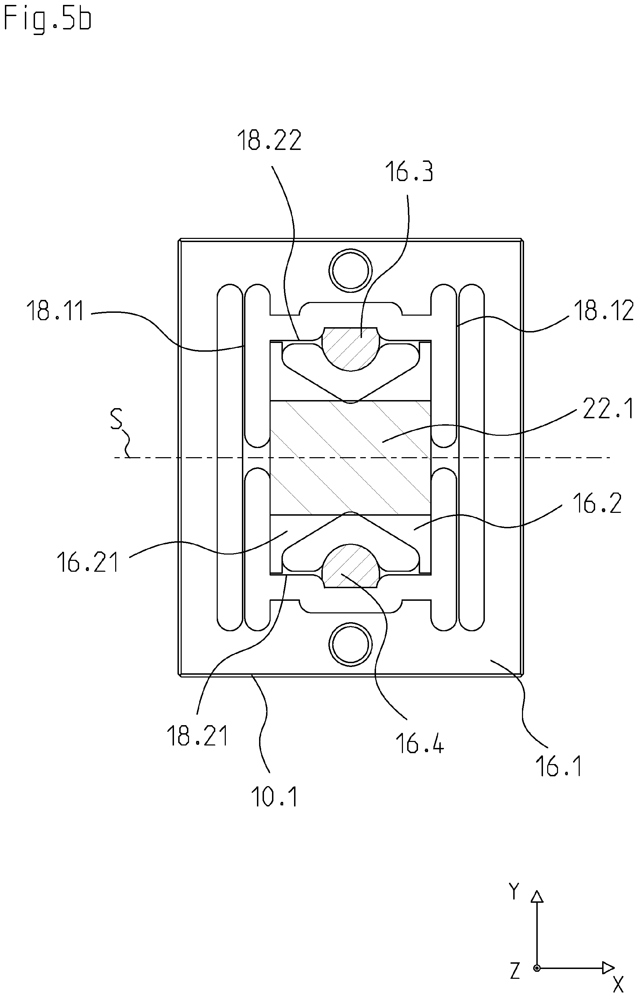

Wie in Figur 5b zu erkennen, weisen die Festkörpergelenke 18.1 des ersten Paares zwei in Längsrichtung X aneinander gegenüberliegend angeordnete erste Blattfedern 18.11, 18.12 auf. Die ersten Blattfedern 18.11, 18.12 sind senkrecht zur Referenzachse S ausgerichtet. Ferner ist in Figur 5b zu erkennen, dass die Festkörpergelenke 18.2 des zweiten Paares zwei in Querrichtung Y einander gegenüberliegend angeordnete zweite Blattfedern 18.21, 18.22 aufweisen. Die zweiten Blattfedern 18.21, 18.22 sind parallel zur Referenzachse S ausgerichtet. Mit Bezug auf Figur 5a erstrecken sich die ersten und zweiten Blattfedern 18.11, 18.12; 18.21, 18.22 jeweils in einer Höhenrichtung Z. Die Höhenrichtung Z verläuft senkrecht zur Messteilungsebene A1 (vgl. Figur 9a bzw. 9b).

Mit Bezug auf Figur 5a und 9a sind der dritte und vierte Abschnitt 16.3, 16.4 durch eine erste stoffschlüssige Verbindung 20.1 zumindest an einer Unterseite (d. h. einer dem Grundkörper 1 zugewandten Seite) C des Maßstabs 12 befestigt. Dadurch wird eine erste unterseitige Befestigung des Maßstabs 12 an der ersten Position P1 erreicht. Die erste stoffschlüssige Verbindung 20.1 ist insbesondere eine vorzugsweise steife Klebeverbindung. Klebeflächen des dritten und vierten Abschnitts 16.3, 16.4 für die Klebeverbindung (d. h. erste stoffschlüssige Verbindung 20.1) sind in Figur 5a schraffiert dargestellt. Die erste stoffschlüssige Verbindung 20.1 umfasst zwei Klebewülste (vgl. Figur 9a), die an zwei in Querrichtung Y einander gegenüberliegenden seitlichen Oberflächen des Maßstabs 12 angrenzen. Wie in Figur 9a gezeigt, verlaufen die seitlichen Oberflächen des Maßstabs 12 jeweils in Längsrichtung X.

Wie in Figur 5a gezeigt, weist das erste Befestigungselement 10.1 ein erstes Haftmittel 22.1 auf. Das erste Haftmittel 22.1 ist ein elastisch verformbares Mittel. Das erste Haftmittel 22.1 ist auf einer oberen (d. h. dem Maßstab 12 zugewandten) Oberfläche 16.21 des zweiten Abschnitts 16.2 und in Querrichtung Y zwischen dem dritten Abschnitt 16.3 und dem vierten Abschnitt 16.4 angeordnet. Das erste Haftmittel 22.1 ist insbesondere ein Gleitklebeband (erste Alternative) oder ein doppelseitig klebendes Klebeband (zweite Alternative).

Wenn das erste Haftmittel 22.1 ein doppelseitig klebendes Klebeband ist, dient es zur zusätzlichen Befestigung des Maßstabs 12 an dem ersten Befestigungselement 10.1.

Bei der ersten Alternative wird durch das erste Haftmittel 22.1 eine Auflagefläche für den Maßstab 12 gebildet. Das Gleitklebeband besteht beispielsweise aus einer Kunststoffschicht und einer Klebeschicht. Durch diese Klebeschicht wird das Gleitklebeband an dem ersten Befestigungselement 10.1 befestigt. Ferner dient diese Klebeschicht als Ausgleichselement während eines Schrumpfens der ersten stoffschlüssigen Verbindung 20.1 (d. h. vorzugsweise steife Klebeverbindung). Dadurch wird im Wesentlichen eine Formänderung des Maßstabs 12 verhindert. Dies erhöht die Genauigkeit der Positionsmessung. Bei der ersten Alternative wird zudem durch das erste Haftmittel 22.1 ein Verschieben des Maßstabs 12 nach einem Auflegen des Maßstabs 12 auf das erste Befestigungselement 10.1 ermöglicht. Dies ist bei einer Justage der Lage des Maßstabs 12 von Vorteil.

Bei der zweiten Alternative wird durch das erste Haftmittel 22.1 wiederum eine Auflagefläche für den Maßstab 12 gebildet. Das doppelseitig klebende Klebeband dient, wie bei der ersten Alternative, als vorteilhaftes Ausgleichselement während eines Schrumpfens der ersten stoffschlüssigen Verbindung 20.1. Bei der zweiten Alternative wird zudem durch das erste Haftmittel 22.1 ein sofortiges Fixieren des Maßstabs 12 nach einem Auflegen des Maßstabs 12 auf das erste Befestigungselement 10.1 ermöglicht. Dadurch wird eine flexible Montage-Lage, insbesondere eine sogenannte Über-Kopf-Montage, erreicht.

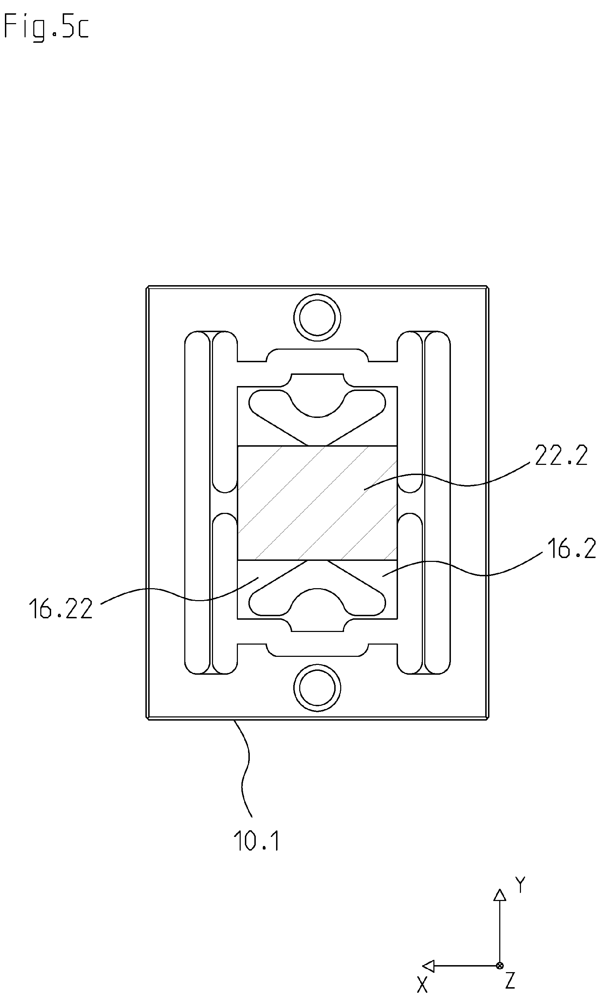

Wie in der Unteransicht von Figur 5c zu erkennen, weist das erste Befestigungselement 10.1 ein zweites Haftmittel 22.2 zum Befestigen des ersten Befestigungselements 10.1 am Grundkörper 1 auf. Das zweite Haftmittel 22.2 ist ein Dämpfungsmittel. Das zweite Haftmittel 22.2 ist auf einer unteren (d. h. dem Maßstab 12 abgewandten) Oberfläche 16.22 des zweiten Abschnitts 16.2 und in Querrichtung Y zwischen dem dritten Abschnitt 16.3 und dem vierten Abschnitt 16.4 angeordnet. Das zweite Haftmittel 22.2 ist insbesondere ein doppelseitig klebendes Klebeband.

Beispielsweise dient das zweite Haftmittel 22.2 als Feder-Dämpfer-System. Dieses Feder-Dämpfer-System hat ein frequenzabhängiges Verhalten. Bei langsamen Bewegungen bewirkt es eine vergleichsweise geringe Steifigkeit, sodass eine gewünschte mechanische Entkopplung nicht beeinflusst wird. Bei hohen Anregungsfrequenzen, wie sie typischerweise in hochdynamischen Applikationen vorkommen, wirkt es wie ein Dämpfer mit hohen Rückstellkräften, sodass vergleichsweise hohe Eigenfrequenzen sowohl im Freiheitsgrad X als auch in einem Freiheitsgrad RX möglich sind.

Mit Bezug auf Figur 5d ist das alternative erste Befestigungselement 10.1a analog zum ersten Befestigungselement 10.1 ausgebildet. Im Unterschied zum ersten Befestigungselement 10.1 weist das alternative erste Befestigungselement 10.1a jedoch kein erstes Haftmittel (im Folgenden dritte Alternative) auf. Ferner ist im Unterschied zum ersten Befestigungselement 10.1 die obere Oberfläche 16.21a des zweiten Abschnitts 16.2a des alternativen ersten Befestigungselements 10.1a gegenüber dem ersten Paar von Festkörpergelenken 18.1a erhöht ausgebildet.

Bei der dritten Alternative wird durch das alternative erste Befestigungselement 10.1a selbst (bzw. durch den zweiten Abschnitt 16.2a) eine Auflagefläche für den Maßstab 12 gebildet. Das alternative erste Befestigungselement 10.1a besteht vorzugsweise aus Stahl.

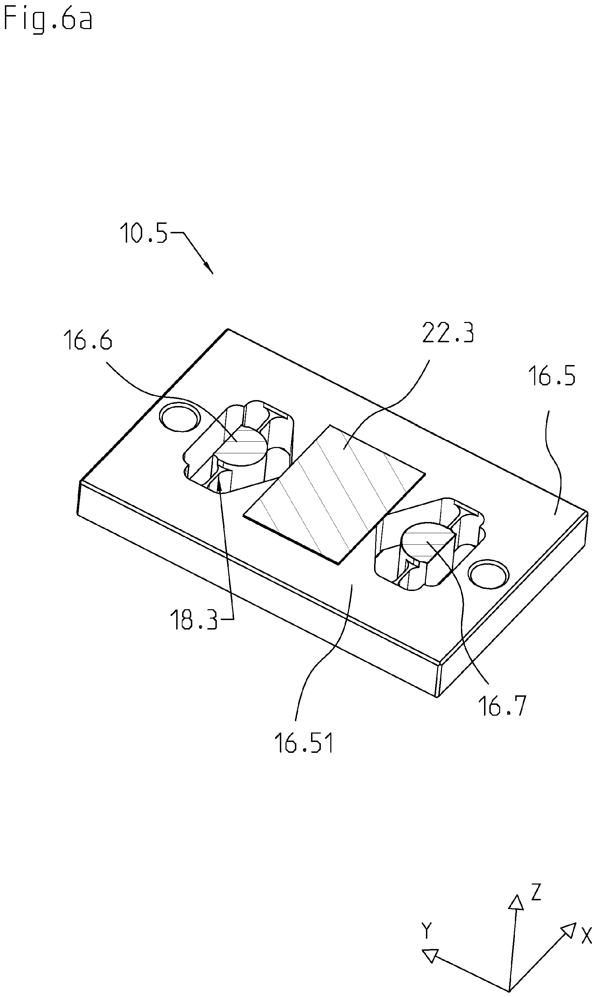

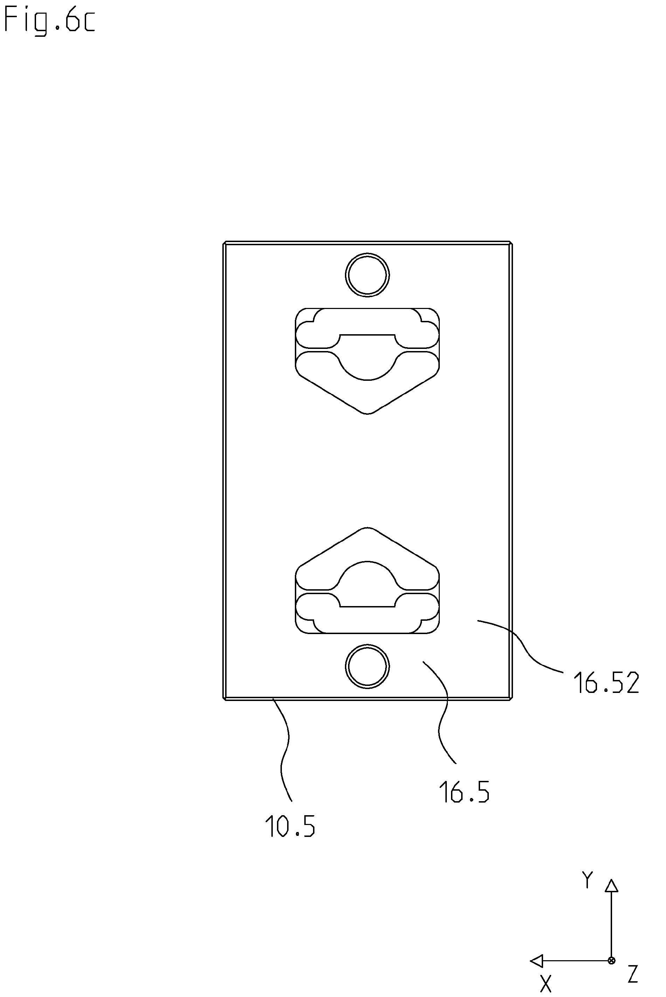

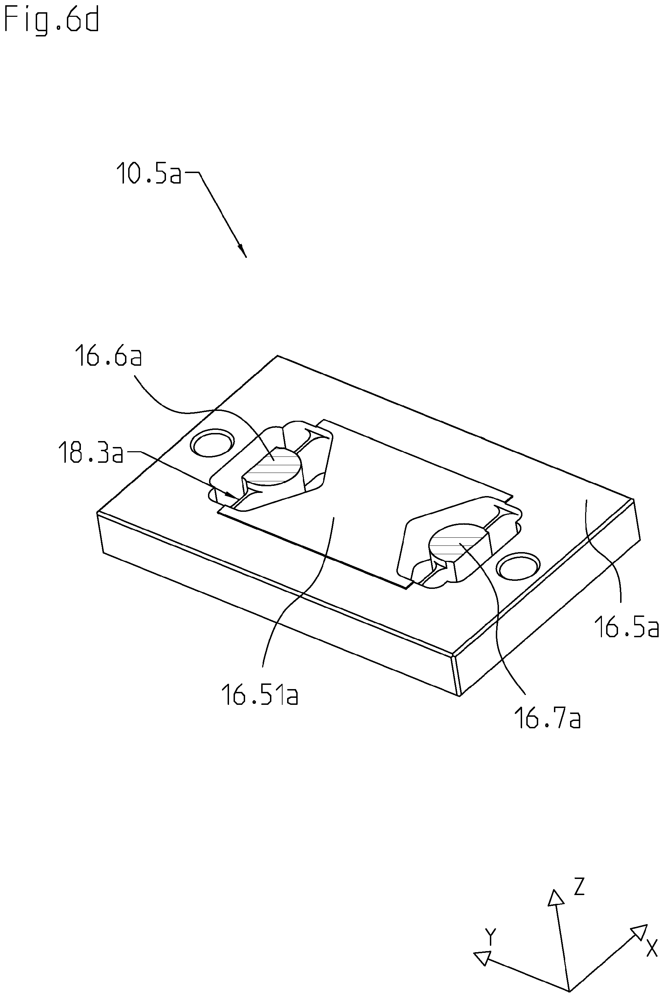

In den Figuren 6a bis 6c sind verschiedene Ansichten des zweiten Befestigungselements 10.5 gezeigt. Figur 6d zeigt eine perspektivische Ansicht eines beispielhaften alternativen zweiten Befestigungselements 10.5a. Das alternative zweite Befestigungselement 10.5a kann anstelle des zweiten Befestigungselements 10.5 Teil der Anordnung nach Figur 1 sein.

Mit Bezug auf Figur 6a und 9b hat das zweite Befestigungselement 10.5 einen fünften Abschnitt 16.5 zum Befestigen des zweiten Befestigungselements 10.5 am Grundkörper 1 und einen mit dem fünften Abschnitt 16.5 verbundenen sechsten und siebten Abschnitt 16.6, 16.7 zum Befestigen der zweiten Randabschnitte 12.21 des Maßstabs 12 an dem zweiten Befestigungselement 10.5. Wie in Figur 6a gezeigt, weist das zweite Befestigungselement 10.5 ein drittes Paar von Festkörpergelenken 18.3 auf. Die Festkörpergelenke 18.3 des dritten Paares sind derart ausgebildet, dass sie eine Bewegung des sechsten und siebten Abschnitts 16.6, 16.7 gegenüber dem fünften Abschnitt 16.5 in Querrichtung Y zulassen.

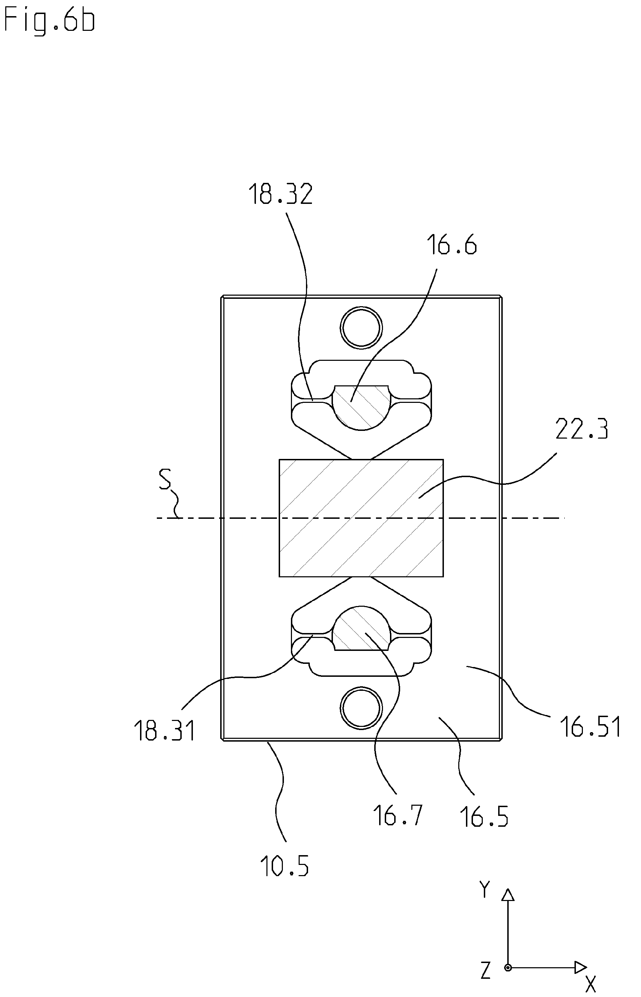

Wie in Figur 6b zu erkennen, weisen die Festkörpergelenke 18.3 des dritten Paares zwei in Querrichtung Y einander gegenüberliegend angeordnete dritte Blattfedern 18.31, 18.32 auf. Die dritten Blattfedern 18.31, 18.32 sind parallel zur Referenzachse S ausgerichtet. Die dritten Blattfedern 18.31, 18.32 erstrecken sich jeweils in Höhenrichtung Z (vgl. Figur 6a).

Mit Bezug auf Figur 6a und 9b sind der sechste und siebte Abschnitt 16.6, 16.7 durch eine zweite stoffschlüssige Verbindung 20.2 zumindest an der Unterseite C des Maßstabs 12 befestigt. Dadurch wird eine zweite unterseitige Befestigung des Maßstabs 12 an der zweiten Position P2 erreicht. Die zweite stoffschlüssige Verbindung 20.2 ist insbesondere eine vorzugsweise steife Klebeverbindung. Klebeflächen des sechsten und siebten Abschnitts 16.6, 16.7 für die Klebeverbindung (d. h. zweite stoffschlüssige Verbindung 20.2) sind in Figur 6a schraffiert dargestellt. Die zweite stoffschlüssige Verbindung 20.2 weist zwei Klebewülste auf, die an die seitlichen Oberflächen des Maßstabs 12 angrenzen (vgl. Figur 9b).

Wie in Figur 6a gezeigt, weist das zweite Befestigungselement 10.5 ein drittes Haftmittel 22.3 auf. Das dritte Haftmittel 22.3 ist ein elastisch verformbares Mittel. Das dritte Haftmittel 22.3 ist auf einer oberen (d. h. dem Maßstab 12 zugewandten) Oberfläche 16.51 des fünften Abschnitts 16.5 und in Querrichtung Y zwischen dem sechsten Abschnitt 16.6 und dem siebten Abschnitt 16.7 angeordnet. Das dritte Haftmittel 22.3 ist insbesondere ein Gleitklebeband (vierte Alternative) oder ein doppelseitig klebendes Klebeband (fünfte Alternative).

Wenn das dritte Haftmittel 22.3 ein doppelseitig klebendes Klebeband ist, dient es zur zusätzlichen Befestigung des Maßstabs 12 an dem zweiten Befestigungselement 10.5.

Bei der vierten Alternative wird durch das dritte Haftmittel 22.3 eine Auflagefläche für den Maßstab 12 gebildet. Das Gleitklebeband besteht beispielsweise aus einer Kunststoffschicht und einer Klebeschicht. Durch diese Klebeschicht wird das Gleitklebeband an dem zweiten Befestigungselement 10.5 befestigt. Ferner dient diese Klebeschicht als Ausgleichselement während eines Schrumpfens der zweiten stoffschlüssigen Verbindung 20.2 (d. h. vorzugsweise steife Klebeverbindung). Dadurch wird im Wesentlichen eine Formänderung des Maßstabs 12 verhindert. Dies erhöht die Genauigkeit der Positionsmessung. Bei der vierten Alternative wird zudem durch das dritte Haftmittel 22.3 ein Verschieben des Maßstabs 12 nach einem Auflegen des Maßstabs 12 auf das zweite Befestigungselement 10.5 ermöglicht. Dies ist bei einer Justage der Lage des Maßstabs 12 von Vorteil.

Bei der fünften Alternative wird durch das dritte Haftmittel 22.3 wiederum eine Auflagefläche für den Maßstab 12 gebildet. Das doppelseitig klebende Klebeband dient, wie bei der vierten Alternative, als vorteilhaftes Ausgleichselement während eines Schrumpfens der zweiten stoffschlüssigen Verbindung 20.2. Bei der fünften Alternative wird zudem durch das dritte Haftmittel 22.3 ein sofortiges Fixieren des Maßstabs 12 nach einem Auflegen des Maßstabs 12 auf das zweite Befestigungselement 10.5 ermöglicht. Dadurch wird eine flexible Montage-Lage, insbesondere eine sogenannte Über-Kopf-Montage, erreicht.

Mit Bezug auf Figur 6d ist das alternative zweite Befestigungselement 10.5a analog zum zweiten Befestigungselement 10.5 ausgebildet. Im Unterschied zum zweiten Befestigungselement 10.5 weist das alternative zweite Befestigungselement 10.5a jedoch kein drittes Haftmittel (im Folgenden sechste Alternative) auf. Ferner ist im Unterschied zum zweiten Befestigungselement 10.5 die obere Oberfläche 16.51a des fünften Abschnitts 16.5a des alternativen zweiten Befestigungselements 10.5a gegenüber dem fünften Abschnitt 16.5a erhöht ausgebildet (vgl. Figur 6d).

Bei der sechsten Alternative wird durch das alternative zweite Befestigungselement 10.5a selbst (bzw. durch den fünften Abschnitt 16.5a) eine Auflagefläche für den Maßstab 12 gebildet. Das alternative zweite Befestigungselement 10.5a besteht vorzugsweise aus Stahl.

Durch die erste bis sechste Alternative wird jeweils ein definierter Klebespalt für die erste bzw. zweite stoffschlüssige Verbindung 20.1, 20.2 bereitgestellt (vgl. Figur 9a und 9b).

Wie in Figur 9a und 9b gezeigt, werden durch das erste Befestigungselement 10.1 eine erste Auflagefläche D1 für die erste stoffschlüssige Verbindung 20.1 und durch das zweite Befestigungselement 10.5 eine zweite Auflagefläche D2 für die zweite stoffschlüssige Verbindung 20.2 gebildet. Die erste und zweite Auflagefläche D1, D2 dienen, zusammen mit den seitlichen Oberflächen des Maßstabs 12, jeweils als Dosierhilfe für eine Dosiernadel. Durch die Dosierhilfe wird eine Aufbringung/Dosierung eines Klebstoffs erleichtert.

Wie in Figur 9a gezeigt, ist die Unterseite C des Maßstabs 12 in Höhenrichtung (Z) oberhalb der ersten Auflagefläche D1 angeordnet. Durch das erste Haftmittel 22.1 (bzw. dessen Dicke) wird dabei eine Höhe (Z-Position) der Unterseite C eingestellt. Zwischen der ersten Auflagefläche D1 und der Unterseite C wird ein erster Zwischenraum gebildet.

Wie in Figur 9b gezeigt, ist die Unterseite C des Maßstabs 12 in Höhenrichtung (Z) oberhalb der zweiten Auflagefläche D2 angeordnet. Durch das dritte Haftmittel 22.3 (bzw. dessen Dicke) wird dabei eine Höhe (Z-Position) der Unterseite C eingestellt. Zwischen der zweiten Auflagefläche D2 und der Unterseite C wird ein zweiter Zwischenraum gebildet.

Durch den ersten und zweiten Zwischenraum wird jeweils der vorgenannte definierte Klebespalt gebildet (erste, zweite, vierte und fünfte Alternative).

Bei der dritten und sechsten Alternative wird, analog zur ersten, zweiten, vierten und fünften Alternative, die Höhe (Z-Position) der Unterseite C zur Bildung des jeweiligen Zwischenraums durch die (erhöht ausgebildete) obere Oberfläche 16.21a (vgl. Figur 5d) bzw. 16.51a (vgl. Figur 6d) eingestellt.

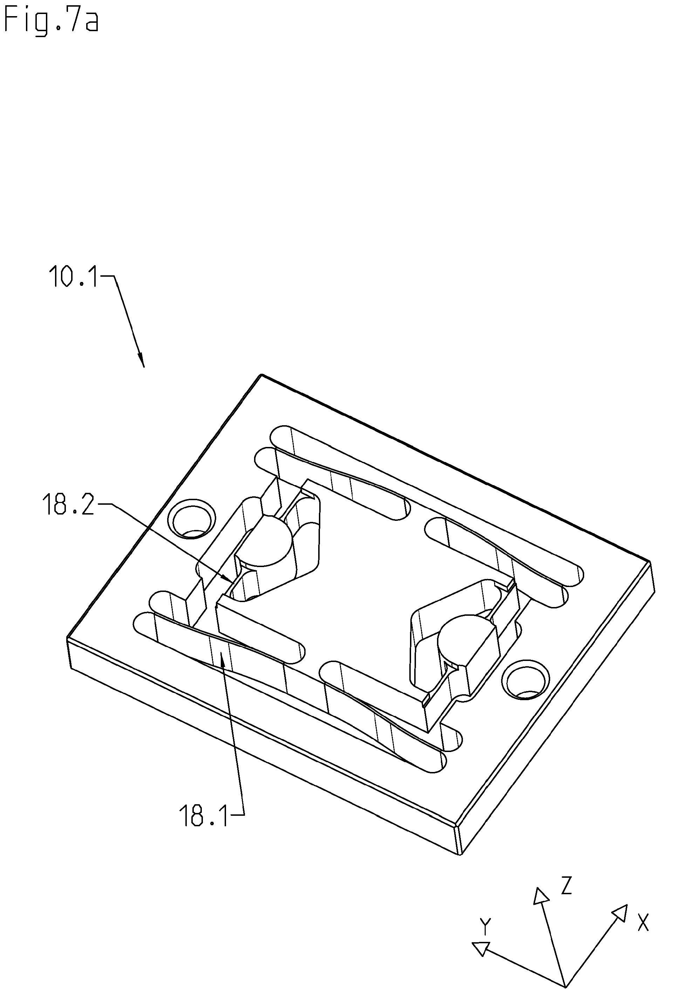

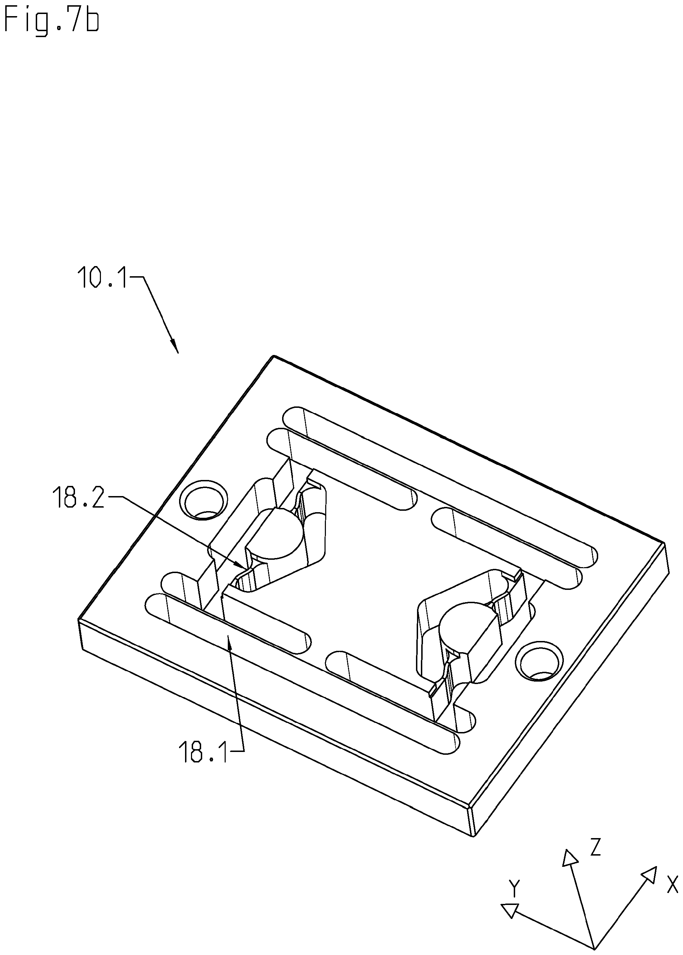

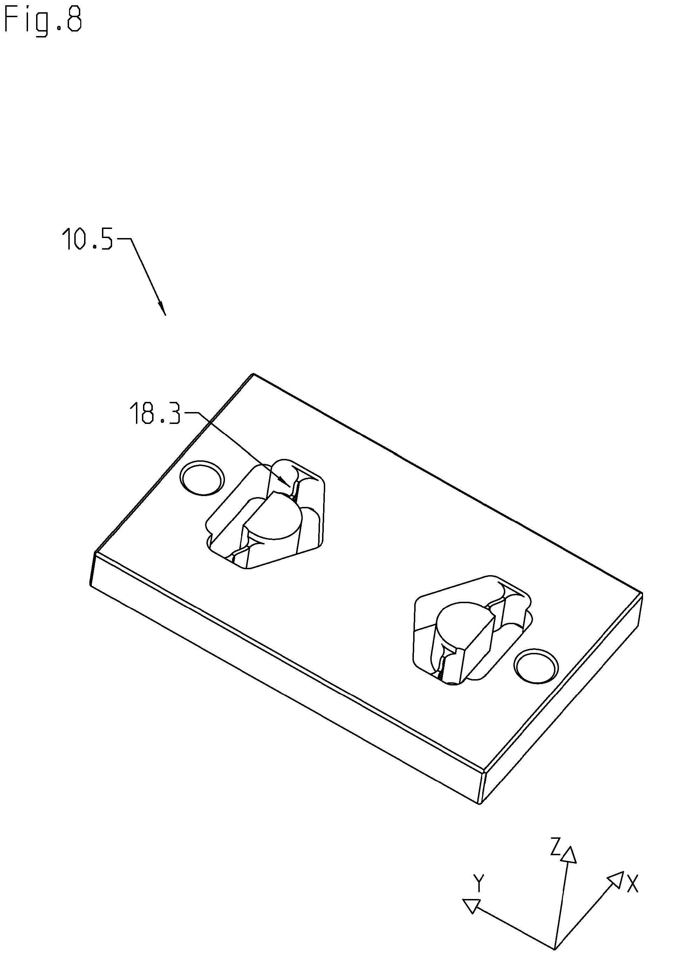

Durch das erste bis dritte Paar von Festkörpergelenken 18.1 bis 18.3 werden die in den Figuren 7a, 7b und 8 dargestellten ausgelenkten Zustände des ersten und zweiten Befestigungselements 10.1, 10.5 erreicht. In den Figuren 7a, 7b und 8 sind die zuvor schraffiert dargestellten Elemente (Klebeflächen und erstes bzw. drittes Haftmittel 22.1, 22.3) weggelassen worden. In Figur 7a ist das erste Befestigungselement 10.1 im ersten ausgelenkten Zustand dargestellt. Dies entspricht gleichsam einer Entkopplung in dem folgenden Freiheitsgrad: X_außen frei. In Figur 7b ist das erste Befestigungselement 10.1 im zweiten ausgelenkten Zustand dargestellt. Dies entspricht gleichsam einer Entkopplung in dem folgenden Freiheitsgrad: Y_innen frei. In Figur 8 ist das zweite Befestigungselement 10.5 im ausgelenkten Zustand dargestellt. Dies entspricht gleichsam einer Entkopplung in dem folgenden Freiheitsgrad: Y_innen frei.

Das erste Paar von Festkörpergelenken 18.1 hat eine erste Steifigkeit. Das zweite Paar von Festkörpergelenken 18.2 hat eine zweite Steifigkeit. Vorzugsweise ist die zweite Steifigkeit größer, beispielsweise mehr als hundertmal mal so groß, wie die erste Steifigkeit. Das dritte Paar von Festkörpergelenken 18.3 hat eine dritte Steifigkeit. Die erste Steifigkeit und die dritte Steifigkeit sind vorzugsweise gleich groß.

Die Erfindung hat insbesondere die folgenden Vorteile. Eine monolithische Bauweise des ersten und zweiten Befestigungselements 10.1, 10.5 führt zum einen zu relativ geringen Herstellungskosten und zum anderen zu einer relativ einfachen Justage/Montage der Anordnung. Ferner wird durch die monolithische Bauweise eine relativ hohe Eigensteifigkeit der Anordnung erreicht. Durch eine in Bezug auf die Symmetrieachse S symmetrische Bauweise und Fixierung des Maßstabs 12 wird ein symmetrisches Driftverhalten bzw. eine symmetrische Entkopplung im Freiheitsgrad Y_innen, d. h. eine vorzugsweise symmetrische Bewegung der ersten bzw. zweiten Randabschnitte 12.11, 12.21, erreicht. Trotz der vorgenannten symmetrischen Entkopplung wird eine relativ hohe Eigenfrequenz (d. h. im Wesentlichen ortsfeste Fixierung) im Freiheitsgrad Y_außen erreicht. Darüber hinaus ermöglicht die Erfindung zumindest an der ersten Position P1 eine Entkopplung im Freiheitsgrad X_außen. Insgesamt können dadurch einerseits durch eine Temperaturänderung bedingte Einflüsse weitestgehend vermieden werden. Andererseits kann dadurch die relativ hohe Eigensteifigkeit der Anordnung erreicht werden.

Durch die Erfindung werden Spannungen innerhalb eines Klebstoffs zur Bildung der ersten und zweiten stoffschlüssigen Verbindung 20.1, 20.2, die durch unterschiedliche thermische Ausdehnungskoeffizienten und/oder eine Veränderung der Umgebungstemperatur hervorgerufen werden, vermieden. Hierzu dient eine besondere Auslegung der Form, Lage und Anzahl von Klebeflächen (d. h. Klebeflächen des dritten und vierten Abschnitts 16.3, 16.4 bzw. 16.3a, 16.4a und Klebeflächen des sechsten und siebten Abschnitts 16.6, 16.7 bzw. 16.6a, 16.7a) für die Klebeverbindung (d. h. erste und zweite stoffschlüssige Verbindung 20.1, 20.2), wie sie in Figur 5a, 5b, 5d und Figur 6a, 6b, 6d gezeigt ist. Dadurch wird ein Versagen der Klebeverbindung (z. B. durch ein Reißen derselben) verhindert.

Die Erfindung ist nicht auf das lichtelektrische Abtastprinzip beschränkt. Die Messteilung 14 kann insbesondere auch magnetisch oder induktiv abtastbar ausgebildet sein.

## Patentansprüche

1. Anordnung, mit
einem Träger (10),
einem auf dem Träger (10) angeordneten Maßstab (12), wobei sich der Maßstab (12) in einer Längsrichtung (X) erstreckt, und wobei der Maßstab (12) eine in einer Messteilungsebene (A1) angeordnete Messteilung (14) zur Positionsmessung zumindest in Längsrichtung (X) aufweist,
wobei der Träger (10) eine Mehrzahl von einzelnen Abschnitten (10.1 - 10.9) aufweist, wobei die einzelnen Abschnitte (10.1 - 10.9) des Trägers (10) jeweils als ein Befestigungselement zum Befestigen des Maßstabs (12) an dem Träger (10) ausgebildet sind,
wobei der Träger (10) ein erstes Befestigungselement (10.1) und ein zweites Befestigungselement (10.5) aufweist, wobei das erste Befestigungselement (10.1) dazu ausgebildet ist, einen ersten Querschnitt (12.1) des Maßstabs (12) an einer ersten Position (P1) in Längsrichtung (X) frei beweglich gegenüber dem Träger (10) zu tragen, wobei das zweite Befestigungselement (10.5) dazu ausgebildet ist, einen zweiten Querschnitt (12.2) des Maßstabs (12) an einer von der ersten Position (P1) verschiedenen zweiten Position (P2) in Längsrichtung (X) starr an dem Träger (10) zu tragen,
wobei das zweite Befestigungselement (10.5) derart ausgebildet ist, dass es an der zweiten Position (P2) eine Bewegung von zwei in Querrichtung (Y) einander gegenüberliegend angeordneten zweiten Randabschnitten (12.21) des Maßstabs (12) gegenüber dem Träger (10) senkrecht zu einer Referenzachse (S) zulässt, wobei die Referenzachse (S) parallel zur Längsrichtung (X) verläuft,
**dadurch gekennzeichnet, dass** das erste Befestigungselement (10.1) derart ausgebildet ist, dass es an der ersten Position (P1) eine Bewegung von zwei in Querrichtung (Y) einander gegenüberliegend angeordneten ersten Randabschnitten (12.11) des Maßstabs (12) gegenüber dem Träger (10) senkrecht zur Referenzachse (S) zulässt,
wobei das erste Befestigungselement (10.1) einen ersten Abschnitt (16.1) zum Befestigen des ersten Befestigungselements (10.1) an einem Grundkörper (1), einen mit dem ersten Abschnitt (16.1) verbundenen zweiten Abschnitt (16.2) zum Tragen des Maßstabs (12) und einen mit dem zweiten Abschnitt (16.2) verbundenen dritten und vierten Abschnitt (16.3, 16.4) zum Befestigen der ersten Randabschnitte (12.11) des Maßstabs (12) an dem ersten Befestigungselement (10.1) hat,
wobei das erste Befestigungselement (10.1) ein erstes Paar von Festkörpergelenken (18.1) aufweist, wobei die Festkörpergelenke (18.1) des ersten Paares derart ausgebildet sind, dass sie eine Bewegung des zweiten Abschnitts (16.2) gegenüber dem ersten Abschnitt (16.1) in Längsrichtung (X) zulassen, wobei das erste Befestigungselement (10.1) ein zweites Paar von Festkörpergelenken (18.2) aufweist, wobei die Festkörpergelenke (18.2) des zweiten Paares derart ausgebildet sind, dass sie eine Bewegung des dritten und vierten Abschnitts (16.3, 16.4) gegenüber dem zweiten Abschnitt (16.2) in Querrichtung (Y) zulassen,
wobei der dritte und vierte Abschnitt (16.3, 16.4) durch eine erste stoffschlüssige Verbindung (20.1) zumindest an einer Unterseite (C) des Maßstabs (12) an der ersten Position (P1) befestigt sind,
wobei das zweite Befestigungselement (10.5) einen fünften Abschnitt (16.5) zum Befestigen des zweiten Befestigungselements (10.5) an dem Grundkörper (1) und einen mit dem fünften Abschnitt (16.5) verbundenen sechsten und siebten Abschnitt (16.6, 16.7) zum Befestigen der zweiten Randabschnitte (12.21) des Maßstabs (12) an dem zweiten Befestigungselement (10.5) hat,
wobei das zweite Befestigungselement (10.5) ein drittes Paar von Festkörpergelenken (18.3) aufweist, wobei die Festkörpergelenke (18.3) des dritten Paares derart ausgebildet sind, dass sie eine Bewegung des sechsten und siebten Abschnitts (16.6, 16.7) gegenüber dem fünften Abschnitt (16.5) in Querrichtung (Y) zulassen,
wobei der sechste und siebte Abschnitt (16.6, 16.7) durch eine zweite stoffschlüssige Verbindung (20.2) zumindest an der Unterseite (C) des Maßstabs (12) an der zweiten Position (P2) befestigt sind.

2. Anordnung nach Anspruch 1, wobei die Referenzachse (S) eine Symmetrieachse des Maßstabs (12) ist.

3. Anordnung nach Anspruch 1 oder 2, wobei das erste und zweite Befestigungselement (10.1, 10.5) derart ausgebildet sind, dass sie jeweils an der ersten und zweiten Position (P1, P2) eine Bewegung der ersten und zweiten Randabschnitte (12.11, 12.21) des Maßstabs (12) gegenüber dem Träger (10) in Richtung hin zu oder weg von der Referenzachse (S) zulassen.

4. Anordnung nach einem der vorhergehenden Ansprüche, wobei das erste und zweite Befestigungselement (10.1, 10.5) derart ausgebildet sind, dass sie jeweils an der ersten und zweiten Position (P1, P2) eine in Bezug auf die Referenzachse (S) symmetrische Bewegung der ersten und zweiten Randabschnitte (12.11, 12.21) des Maßstabs (12) gegenüber dem Träger (10) zulassen.

5. Anordnung nach einem der vorhergehenden Ansprüche, wobei die Festkörpergelenke (18.1) des ersten Paares zwei in Längsrichtung (X) einander gegenüberliegend angeordnete erste Blattfedern (18.11, 18.12) aufweisen, wobei die ersten Blattfedern (18.11, 18.12) senkrecht zur Referenzachse (S) ausgerichtet sind, wobei die Festkörpergelenke (18.2) des zweiten Paares zwei in Querrichtung (Y) einander gegenüberliegend angeordnete zweite Blattfedern (18.21, 18.22) aufweisen, wobei die zweiten Blattfedern (18.21, 18.22) parallel zur Referenzachse (S) ausgerichtet sind, wobei sich die ersten und zweiten Blattfedern (18.11, 18.12; 18.21, 18.22) jeweils in einer Höhenrichtung (Z), die senkrecht zur Messteilungsebene (A1) verläuft, erstrecken.

6. Anordnung nach einem der vorhergehenden Ansprüche, wobei das erste Befestigungselement (10.1) ein erstes Haftmittel (22.1) aufweist, wobei das erste Haftmittel (22.1) ein elastisch verformbares Mittel ist, und wobei das erste Haftmittel (22.1) auf einer oberen Oberfläche des zweiten Abschnitts (16.2) und in Querrichtung (Y) zwischen dem dritten Abschnitt (16.3) und dem vierten Abschnitt (16.4) angeordnet ist.

7. Anordnung nach einem der vorhergehenden Ansprüche, wobei das erste Befestigungselement (10.1) ein zweites Haftmittel (22.2) zum Befestigen des ersten Befestigungselements (10.1) an dem Grundkörper (1) aufweist, wobei das zweite Haftmittel (22.2) ein Dämpfungsmittel ist, und wobei das zweite Haftmittel (22.2) auf einer unteren Oberfläche (16.22) des zweiten Abschnitts (16.2) und in Querrichtung (Y) zwischen dem dritten Abschnitt (16.3) und dem vierten Abschnitt (16.4) angeordnet ist.

8. Anordnung nach einem der vorhergehenden Ansprüche, wobei die Festkörpergelenke (18.3) des dritten Paares zwei in Querrichtung (Y) einander gegenüberliegend angeordnete dritte Blattfedern (18.31, 18.32) aufweisen, wobei die dritten Blattfedern (18.31, 18.32) parallel zur Referenzachse (S) ausgerichtet sind, wobei sich die dritten Blattfedern (18.31, 18.32) jeweils in einer Höhenrichtung (Z), die senkrecht zur Messteilungsebene (A1) verläuft, erstrecken.

9. Anordnung nach einem der vorhergehenden Ansprüche, wobei das zweite Befestigungselement (10.5) ein drittes Haftmittel (22.3) aufweist, wobei das dritte Haftmittel (22.3) ein elastisch verformbares Mittel ist, und wobei das dritte Haftmittel (22.3) auf einer oberen Oberfläche (16.51) des fünften Abschnitts (16.5) und in Querrichtung (Y) zwischen dem sechsten Abschnitt (16.6) und dem siebten Abschnitt (16.7) angeordnet ist.

10. Anordnung nach einem der vorhergehenden Ansprüche, wobei das erste und zweite Befestigungselement (10.1, 10.5) jeweils einstückig ausgebildet sind.

11. Anordnung nach einem der vorhergehenden Ansprüche, wobei das erste Befestigungselement (10.1) und der erste Querschnitt (12.1) des Maßstabs (12) und das zweite Befestigungselement (10.5) und der zweite Querschnitt (12.2) des Maßstabs (12) jeweils unmittelbar miteinander verbunden sind.

## Claims

1. Arrangement, having
a carrier (10),
a scale (12) which is arranged on the carrier (10), wherein the scale (12) extends in a longitudinal direction (X), and wherein the scale (12) has a measuring graduation (14), arranged in a measuring graduation plane (A1), for position measurement at least in the longitudinal direction (X),
wherein the carrier (10) has a plurality of individual sections (10.1 - 10.9), wherein the individual sections (10.1 - 10.9) of the carrier (10) are each in the form of a fastening element for fastening the scale (12) to the carrier (10),
wherein the carrier (10) has a first fastening element (10.1) and a second fastening element (10.5), wherein the first fastening element (10.1) is configured to carry a first cross section (12.1) of the scale (12) at a first position (P1) in a manner freely movable in the longitudinal direction (X) in relation to the carrier (10), wherein the second fastening element (10.5) is configured to carry a second cross section (12.2) of the scale (12) on the carrier (10) at a second position (P2), which differs from the first position (P1), in a manner rigid in the longitudinal direction (X),
wherein the second fastening element (10.5) is designed in such a way as to permit, at the second position (P2), a movement of two second edge sections (12.21), which are arranged situated opposite one another in a transverse direction (Y), of the scale (12) perpendicular to a reference axis (S) in relation to the carrier (10), wherein the reference axis (S) extends parallel to the longitudinal direction (X),
**characterized in that** the first fastening element (10.1) is designed in such a way as to permit, at the first position (P1), a movement of two first edge sections (12.11), which are arranged situated opposite one another in the transverse direction (Y), of the scale (12) perpendicular to the reference axis (S) in relation to the carrier (10),
wherein the first fastening element (10.1) has a first section (16.1) for fastening of the first fastening element (10.1) to a main body (1), has a second section (16.2), connected to the first section (16.1), for carrying the scale (12), and has a third and a fourth section (16.3, 16.4), connected to the second section (16.2), for fastening of the first edge sections (12.11) of the scale (12) to the first fastening element (10.1), wherein the first fastening element (10.1) has a first pair of flexure joints (18.1), wherein the flexure joints (18.1) of the first pair are designed in such a way as to permit a movement of the second section (16.2) in the longitudinal direction (X) in relation to the first section (16.1), wherein the first fastening element (10.1) has a second pair of flexure joints (18.2), wherein the flexure joints (18.2) of the second pair are designed in such a way as to permit a movement of the third and fourth sections (16.3, 16.4) in the transverse direction (Y) in relation to the second section (16.2), wherein the third and fourth sections (16.3, 16.4) are fastened by a first materially bonded connection (20.1) at least to a bottom side (C) of the scale (12) at the first position (P1),
wherein the second fastening element (10.5) has a fifth section (16.5) for fastening of the second fastening element (10.5) to the main body (1), and has a sixth and a seventh section (16.6, 16.7), connected to the fifth section (16.5), for fastening of the second edge sections (12.21) of the scale (12) to the second fastening element (10.5),
wherein the second fastening element (10.5) has a third pair of flexure joints (18.3), wherein the flexure joints (18.3) of the third pair are designed in such a way as to permit a movement of the sixth and seventh sections (16.6, 16.7) in the transverse direction (Y) in relation to the fifth section (16.5),
wherein the sixth and seventh sections (16.6, 16.7) are fastened by a second materially bonded connection (20.2) at least to the bottom side (C) of the scale (12) at the second position (P2).

2. Arrangement according to Claim 1, wherein the reference axis (S) is an axis of symmetry of the scale (12).

3. Arrangement according to Claim 1 or 2, wherein the first and second fastening elements (10.1, 10.5) are designed in such a way as to permit, respectively at the first and second positions (P1, P2), a movement of the first and second edge sections (12.11, 12.21) of the scale (12) in the direction towards or away from the reference axis (S) in relation to the carrier (10).

4. Arrangement according to one of the preceding claims, wherein the first and second fastening elements (10.1, 10.5) are designed in such a way as to permit, respectively at the first and second positions (P1, P2), a movement of the first and second edge sections (12.11, 12.21) of the scale (12) in relation to the carrier (10) that is symmetrical with respect to the reference axis (S).

5. Arrangement according to one of the preceding claims, wherein the flexure joints (18.1) of the first pair have two first leaf springs (18.11, 18.12) which are arranged situated opposite one other in the longitudinal direction (X), wherein the first leaf springs (18.11, 18.12) are oriented so as to be perpendicular to the reference axis (S), wherein the flexure joints (18.2) of the second pair have two second leaf springs (18.21, 18.22) which are arranged situated opposite one other in the transverse direction (Y), wherein the second leaf springs (18.21, 18.22) are oriented so as to be parallel to the reference axis (S), wherein the first and second leaf springs (18.11, 18.12; 18.21, 18.22) respectively extend in a vertical direction (Z), which extends perpendicularly to the measuring graduation plane (A1).

6. Arrangement according to one of the preceding claims, wherein the first fastening element (10.1) has a first adhesion means (22.1), wherein the first adhesion means (22.1) is an elastically deformable means, and wherein the first adhesion means (22.1) is arranged on an upper surface of the second section (16.2) and between the third section (16.3) and the fourth section (16.4) in the transverse direction (Y).

7. Arrangement according to one of the preceding claims, wherein the first fastening element (10.1) has a second adhesion means (22.2) for fastening of the first fastening element (10.1) to the main body (1), wherein the second adhesion means (22.2) is a damping means, and wherein the second adhesion means (22.2) is arranged on a lower surface (16.22) of the second section (16.2) and between the third section (16.3) and the fourth section (16.4) in the transverse direction (Y).

8. Arrangement according to one of the preceding claims, wherein the flexure joints (18.3) of the third pair have two third leaf springs (18.31, 18.32) which are arranged situated opposite one other in the transverse direction (Y), wherein the third leaf springs (18.31, 18.32) are oriented so as to be parallel to the reference axis (S), wherein the third leaf springs (18.31, 18.32) each extend in a vertical direction (Z), which extends perpendicularly to the measuring graduation plane (A1).

9. Arrangement according to one of the preceding claims, wherein the second fastening element (10.5) has a third adhesion means (22.3), wherein the third adhesion means (22.3) is an elastically deformable means, and wherein the third adhesion means (22.3) is arranged on an upper surface (16.51) of the fifth section (16.5) and between the sixth section (16.6) and the seventh section (16.7) in the transverse direction (Y).

10. Arrangement according to one of the preceding claims, wherein the first and second fastening elements (10.1, 10.5) are each formed in one piece.

11. Arrangement according to one of the preceding claims, wherein the first fastening element (10.1) and the first cross section (12.1) of the scale (12) and the second fastening element (10.5) and the second cross section (12.2) of the scale (12) are respectively connected directly to one another.

## Revendications

1. Agencement, comprenant
un support (10),
une échelle de mesure (12) disposée sur le support (10), l'échelle de mesure (12) s'étendant dans une direction longitudinale (X), et l'échelle de mesure (12) présentant une graduation de mesure (14) disposée dans un plan de graduation de mesure (A1) pour la mesure de position au moins dans la direction longitudinale (X),
le support (10) présentant une pluralité de parties individuelles (10.1 - 10.9), les parties individuelles (10.1 - 10.9) du support (10) étant respectivement conçues sous la forme d'un élément de fixation destiné à fixer l'échelle de mesure (12) sur le support (10),
le support (10) comportant un premier élément de fixation (10.1) et un deuxième élément de fixation (10.5), le premier élément de fixation (10.1) étant conçu pour supporter une première section transversale (12.1) de l'échelle de mesure (12) à une première position (P1) dans la direction longitudinale (X) de manière librement mobile par rapport au support (10), le deuxième élément de fixation (10.5) étant conçu pour supporter de manière rigide une deuxième section transversale (12.2) de l'échelle de mesure (12) sur le support (10) à une deuxième position (P2), différente de la première position (P1), dans la direction longitudinale (X),
le deuxième élément de fixation (10.5) étant conçu de telle sorte qu'il autorise, à la deuxième position (P2), un mouvement de deux deuxièmes parties de bord (12.21) de l'échelle de mesure (12) disposées en face l'une de l'autre dans la direction transversale (Y) par rapport au support (10), perpendiculairement à un axe de référence (S), l'axe de référence (S) étant parallèle à la direction longitudinale (X),
**caractérisé en ce que** le premier élément de fixation (10.1) est conçu de telle sorte qu'il autorise, à la première position (P1), un mouvement de deux premières parties de bord (12.11) de l'échelle de mesure (12) par rapport au support (10), disposées en face l'une de l'autre dans la direction transversale (Y), perpendiculairement à l'axe de référence (S),
le premier élément de fixation (10.1) comprenant une première partie (16.1) destinée à fixer le premier élément de fixation (10.1) à un corps de base (1), une deuxième partie (16.2) reliée à la première partie (16.1) et destinée à supporter l'échelle de mesure (12), et des troisième et quatrième parties (16.3, 16.4) reliées à la deuxième partie (16.2) et destinées à fixer les premières parties de bord (12.11) de l'échelle de mesure (12) au premier élément de fixation (10.1),
le premier élément de fixation (10.1) comportant une première paire d'articulations à corps solide (18.1), les articulations à corps solide (18.1) de la première paire étant conçues de manière à autoriser un mouvement de la deuxième partie (16.2) par rapport à la première partie (16.1) dans la direction longitudinale (X), le premier élément de fixation (10.1) comportant une deuxième paire d'articulations à corps solide (18.2), les articulations à corps solide (18.2) de la deuxième paire étant conçues de manière à autoriser un mouvement des troisième et quatrième parties (16.3, 16.4) par rapport à la deuxième partie (16.2) dans la direction transversale (Y), les troisième et quatrième parties (16.3, 16.4) étant reliées par une première liaison par complémentarité de matériau (20.1) à au moins une face inférieure (C) de l'échelle de mesure (12) à la première position (P1),
le deuxième élément de fixation (10.5) comprenant une cinquième partie (16.5) destinée à fixer le deuxième élément de fixation (10.5) au corps de base (1) et des sixième et septième parties (16.6, 16.7) reliées à la cinquième partie (16.5) et destinées à fixer les deuxièmes parties de bord (12.21) de l'échelle de mesure (12) au deuxième élément de fixation (10.5),
le deuxième élément de fixation (10.5) comportant une troisième paire d'articulations à corps solide (18.3), les articulations à corps solide (18.3) de la troisième paire étant conçues de manière à autoriser un mouvement des sixième et septième parties (16.6, 16.7) par rapport à la cinquième partie (16.5) dans la direction transversale (Y),
les sixième et septième parties (16.6, 16.7) étant fixées par une deuxième liaison par complémentarité de matériau (20.2) au moins à la face inférieure (C) de l'échelle de mesure (12) à la deuxième position (P2).

2. Agencement selon la revendication 1, dans lequel l'axe de référence (S) est un axe de symétrie de l'échelle de mesure (12).

3. Agencement selon la revendication 1 ou 2, dans lequel les premier et deuxième éléments de fixation (10.1, 10.5) sont conçus de manière à autoriser, respectivement aux première et deuxième positions (P1, P2), un mouvement des première et deuxième parties de bord (12.11, 12.21) de l'échelle de mesure (12) par rapport au support (10) dans une direction de rapprochement ou d'éloignement de l'axe de référence (S).

4. Agencement selon l'une quelconque des revendications précédentes, dans lequel les premier et deuxième éléments de fixation (10.1, 10.5) sont conçus de manière à autoriser, respectivement aux première et deuxième positions (P1, P2), un mouvement symétrique par rapport à l'axe de référence (S) des première et deuxième parties de bord (12.11, 12.21) de l'échelle de mesure (12) par rapport au support (10).

5. Agencement selon l'une quelconque des revendications précédentes, dans lequel les articulations à corps solide (18.1) de la première paire comportent deux premiers ressorts à lame (18.11, 18.12) disposés en face l'un de l'autre dans la direction longitudinale (X), les premiers ressorts à lame (18.11, 18.12) étant orientés perpendiculairement à l'axe de référence (S), les articulations à corps solide (18.2) de la deuxième paire comportant deux deuxièmes ressorts à lame (18.21, 18.22) disposés en face l'un de l'autre dans la direction transversale (Y), les deuxièmes ressorts à lame (18.21, 18.22) étant orientés parallèlement à l'axe de référence (S), les premiers et deuxièmes ressorts à lame (18.11, 18.12 ; 18.21, 18.22) s'étendant respectivement dans une direction de la hauteur (Z) perpendiculaire au plan de graduation de mesure (A1).

6. Agencement selon l'une quelconque des revendications précédentes, dans lequel le premier élément de fixation (10.1) comporte un premier moyen adhésif (22.1), le premier moyen adhésif (22.1) étant un moyen élastiquement déformable, et le premier moyen adhésif (22.1) étant disposé sur une surface supérieure de la deuxième partie (16.2) et dans la direction transversale (Y) entre la troisième partie (16.3) et la quatrième partie (16.4).

7. Agencement selon l'une quelconque des revendications précédentes, dans lequel le premier élément de fixation (10.1) comporte un deuxième moyen adhésif (22.2) pour fixer le premier élément de fixation (10.1) au corps de base (1), le deuxième moyen adhésif (22.2) étant un moyen d'amortissement, et le deuxième moyen adhésif (22.2) étant disposé sur une surface inférieure (16.22) de la deuxième partie (16.2) et dans la direction transversale (Y) entre la troisième partie (16.3) et la quatrième partie (16.4).

8. Agencement selon l'une quelconque des revendications précédentes, dans lequel les articulations à corps solide (18.3) de la troisième paire comportent deux troisièmes ressorts à lame (18.31, 18.32) disposés en face l'un de l'autre dans la direction transversale (Y), les troisièmes ressorts à lame (18.31, 18.32) étant orientés parallèlement à l'axe de référence (S), les troisièmes ressorts à lame (18.31, 18.32) s'étendant respectivement dans une direction de la hauteur (Z) perpendiculaire au plan de graduation de mesure (A1).

9. Agencement selon l'une quelconque des revendications précédentes, dans lequel le deuxième élément de fixation (10.5) comporte un troisième moyen adhésif (22.3), le troisième moyen adhésif (22.3) étant un moyen élastiquement déformable, et le troisième moyen adhésif (22.3) étant disposé sur une surface supérieure (16.51) de la cinquième partie (16.5) et dans la direction transversale (Y) entre la sixième partie (16.6) et la septième partie (16.7).

10. Agencement selon l'une quelconque des revendications précédentes, dans lequel les premier et deuxième éléments de fixation (10.1, 10.5) sont respectivement réalisés d'un seul tenant.

11. Agencement selon l'une quelconque des revendications précédentes, dans lequel le premier élément de fixation (10.1) et la première section transversale (12.1) de l'échelle de mesure (12) et le deuxième élément de fixation (10.5) et la deuxième section transversale (12.2) de l'échelle de mesure (12) sont respectivement reliés directement les uns aux autres.
